(19) Europäisches Patentamt

European Patent Office

Office européen des brevets

(11) **EP 4 631 997 A1**

(12) **EUROPEAN PATENT APPLICATION**

(43) Date of publication:
15.10.2025 Bulletin 2025/42

(21) Application number: 25169718.1

(22) Date of filing: 10.04.2025

(51) International Patent Classification (IPC):
*C08J 9/00* (2006.01)    *B29C 44/44* (2006.01)
*C08J 9/18* (2006.01)    *C08J 9/232* (2006.01)

(52) Cooperative Patent Classification (CPC):
**C08J 9/232; B29C 44/445; C08J 9/0061;**
**C08J 9/18;** C08J 2203/06; C08J 2323/06;
C08J 2323/08; C08J 2423/06; C08J 2423/08;
C08L 2205/025

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 12.04.2024 JP 2024064457

(71) Applicant: JSP Corporation
Tokyo 100-0005 (JP)

(72) Inventor: INOUE, Tsubasa
Yokkaichi-shi, 5100881 (JP)

(74) Representative: Gille Hrabal
Partnerschaftsgesellschaft mbB
Patentanwälte
Brucknerstraße 20
40593 Düsseldorf (DE)

(54) **POLYETHYLENE-BASED RESIN EXPANDED BEAD PRODUCTION METHOD, AND POLYETHYLENE-BASED RESIN EXPANDED BEADS**

(57)    A method for producing expanded beads that have excellent in-mold moldability and produce a molded article of polyethylene-based resin expanded beads having a low shrinkage rate while increasing a biomass degree is provided. In the method, the polyethylene-based resin particles is composed of a mixed resin, which is obtained by kneading linear low-density polyethylene and branched low-density polyethylene, wherein the branched low-density polyethylene has a biomass degree of 30% or more and a heat of fusion of 95 J/g or more; a blending amount of the branched low-density polyethylene in the mixed resin is 5% by mass or more and less than 40% by mass, where a total of the linear low-density polyethylene and the branched low-density polyethylene is 100% by mass; and a heat of fusion of the polyethylene-based resin particle is 90 J/g or more.

EP 4 631 997 A1

## Description

Technical Field

The present invention relates to a method for producing polyethylene-based resin expanded beads and a polyethylene-based resin expanded bead.

Background Art

A molded article of polyethylene-based resin expanded beads obtained by in-mold molding of polyethylene-based resin expanded beads is widely used as shock absorbing materials, heat insulating materials, various packaging materials and others, including packaging/buffering materials for electric/electronic components, packaging/buffering materials for automobile parts, and packaging materials for other precision parts as well as food products.

In recent years, an attempt has been made to obtain polyethylene-based resin expanded beads by using a polyethylene-based resin produced from ethylene originating from natural materials such as plants instead of ethylene derived from fossil fuels in consideration of the environment.

For example, PTL 1 discloses, for the purpose of obtaining a molded article of polyethylene-based resin expanded beads with high biomass degree, a method for producing expanded beads by expanding resin particles containing a mixed resin containing two specific types of linear low-density polyethylenes as a base resin.

Citation List

Patent Literature

PTL1: JP 2023-161416 A

Summary of Invention

Technical Problem

In the case where the expanded beads are produced by using naturally-occurring polyethylene-based resin originating from natural materials such as plants, on the other hand, the in-mold moldability of the expanded beads is lowered, and the shrinkage rate of the resultant molded article tends to increase, compared to the case where the expanded beads are produced by using polyethylene-based resin derived from petroleum.

An object of the present invention is to provide a method for producing expanded beads that have excellent in-mold moldability and can produce a molded article of polyethylene-based resin expanded beads particularly having a low shrinkage rate while increasing a biomass degree.

Solution to Problem

The present inventors have assiduously studied and, as a result, have found that a method for producing expanded beads by expanding resin particles composed of a mixed resin of specific linear low-density polyethylene and specific branched low-density polyethylene can solve above-mentioned problems.

Specifically, one aspect of the present invention relates to the method for producing expanded beads described in [1] to [7] and the expanded beads described in [8] to [10] below.

[1] A method for producing polyethylene-based resin expanded beads by expanding polyethylene-based resin particles, the polyethylene-based resin particles being composed of a mixed resin of linear low-density polyethylene and branched low-density polyethylene, which is obtained by kneading the linear low-density polyethylene and the branched low-density polyethylene, wherein the branched low-density polyethylene has a biomass degree of 30% or more as measured according to ASTM D 6866; a heat of fusion of the branched low-density polyethylene is 95 J/g or more; a blending amount of the branched low-density polyethylene in the mixed resin is 5% by mass or more and less than 40% by mass, where a total of the linear low-density polyethylene and the branched low-density polyethylene is 100% by mass; and a total heat of fusion of the polyethylene-based resin particle is 90 J/g or more.

[2] The method for producing polyethylene-based resin expanded beads according to [1], wherein a difference $\Delta H_{LL} - \Delta H_{LL}$ between a heat of fusion $\Delta H_{LL}$ of the linear low-density polyethylene and a heat of fusion $\Delta H_{LD}$ of the branched low-density polyethylene is 0 J/g or more and 30 J/g or less.

[3] The method for producing polyethylene-based resin expanded beads according to [1] or [2], wherein

the polyethylene-based resin particle has a melting point of 115°C or higher and 130°C or lower; and a difference $Tm_{LL}$ - $Tm_{LD}$ between a melting point $Tm_{LL}$ of the linear low-density polyethylene and a melting point $Tm_{LD}$ of the branched low-density polyethylene is 5°C or higher and 15°C or lower.

[4] The method for producing polyethylene-based resin expanded beads according to any one of [1] to [3], wherein a melt flow rate of the branched low-density polyethylene measured under conditions of a temperature of 190°C and a load of 2.16 kg is 0.1 g/10 min or more and 3 g/10 min or less.

[5] The method for producing polyethylene-based resin expanded beads according to any one of [1] or [4], wherein the linear low-density polyethylene is a copolymer comprising a component derived from octene.

[6] The method for producing polyethylene-based resin expanded beads according to any one of [1] to [5], wherein the polyethylene-based resin particle has a biomass degree of 5% or more as measured according to ASTM D 6866.

[7] The method for producing polyethylene-based resin expanded beads according to any one of [1] to [6], wherein the mixed resin has a flexural modulus of 200 MPa or more.

[8] A polyethylene-based resin expanded bead, the expanded bead being composed of a mixed resin of linear low-density polyethylene and branched low-density polyethylene, wherein the mixed resin has a flexural modulus of 200 MPa or more; the expanded bead has a biomass degree of 5% or more as measured according to ASTM D 6866; and a total heat of fusion of the expanded bead is 90 J/g or more.

[9] The polyethylene-based resin expanded bead according to [8], wherein a blending amount of the branched low-density polyethylene in the mixed resin is 5% by mass or more and less than 40% by mass, where a total of the linear low-density polyethylene and the branched low-density polyethylene is 100% by mass.

[10] The polyethylene-based resin expanded bead according to [8] or [9], wherein the polyethylene-based resin expanded bead has a melting point of 115°C or higher and 130°C or lower.

Advantageous Effects of Invention

According to the present invention, it is possible to provide a method for producing expanded beads that have excellent in-mold moldability and can produce a molded article of polyethylene-based resin expanded beads particularly having a low shrinkage rate while increasing a biomass degree.

Description of Embodiments

[Method for producing polyethylene-based resin expanded beads]

The method for producing polyethylene-based resin expanded beads of the present invention is a method for producing polyethylene-based resin expanded beads by expanding polyethylene-based resin particles,

the polyethylene-based resin particles being composed of a mixed resin of linear low-density polyethylene and branched low-density polyethylene, which is obtained by kneading the linear low-density polyethylene and the branched low-density polyethylene, wherein

the branched low-density polyethylene has a biomass degree of 30% or more as measured according to ASTM D 6866;

a heat of fusion of the branched low-density polyethylene is 95 J/g or more;

a blending amount of the branched low-density polyethylene in the mixed resin is 5% by mass or more and less than 40% by mass, where a total of the linear low-density polyethylene and the branched low-density polyethylene is 100% by mass; and

a total heat of fusion of the polyethylene-based resin particle is 90 J/g or more.

In the present specification, "polyethylene-based resin expanded beads" in the present specification are simply referred to as "expanded beads", "polyethylene-based resin particles" are also simply referred to as "resin particles".

<Polyethylene-based resin particles>

The method for producing polyethylene-based resin expanded beads of the present invention includes expanding resin particles composed of a mixed resin of linear low-density polyethylene and branched low-density polyethylene, which is obtained by kneading the linear low-density polyethylene and the branched low-density polyethylene. The mixed resin of linear low-density polyethylene and branched low-density polyethylene are described below.

<Mixed resin>

The polyethylene-based resin particles for use in the method for producing the polyethylene-based resin expanded beads of the present invention are composed of a mixed resin of linear low-density polyethylene and branched low-density polyethylene, which is obtained by kneading the linear low-density polyethylene and the branched low-density polyethylene.

The mixed resin is obtained by kneading the linear low-density polyethylene and the branched low-density polyethylene.

Furthermore, the branched low-density polyethylene has a biomass degree of 30% or more as measured according to ASTM D 6866; the heat of fusion of the branched low-density polyethylene is 95 J/g or more; and the blending amount of the branched low-density polyethylene in the mixed resin is 5% by mass or more and less than 40% by mass, where the total of the linear low-density polyethylene and the branched low-density polyethylene is 100% by mass.

Next, linear low-density polyethylene before kneading (linear low-density polyethylene as a resin raw material) and branched low-density polyethylene before kneading (branched low-density polyethylene as a resin raw material), which are used to form the mixed resin, are described.

(Linear low-density polyethylene)

The linear low-density polyethylene is a copolymer of ethylene and $\alpha$-olefin, having a linear structure and a density of 910 kg/m$^3$ or more and 940 kg/m$^3$ or less. Note that the linear low-density polyethylene is indicated by the abbreviation "PE-LLD" in "Plastics-Symbols and abbreviated terms- Part 1: Basic polymers and their special characteristics" of JIS K 6899-1:2015.

The heat of fusion ($\Delta H_{LL}$) of the linear low-density polyethylene used to form the mixed resin is, from the viewpoint of easily producing expanded beads having desired physical properties, preferably 80 J/g or more and 140 J/g or less.

In addition, from the viewpoint that the in-mold moldability of the expanded beads can be enhanced while the expanded beads have a desired biomass degree, the heat of fusion ($\Delta H_{LL}$) of the linear low-density polyethylene is preferably 90 J/g or more, more preferably 95 J/g or more, still more preferably 100 J/g or more. Also, from the same viewpoint, the heat of fusion ($\Delta H_{LL}$) of the linear low-density polyethylene is preferably 130 J/g or less, more preferably 120 J/g or less.

The heat of fusion ($\Delta H_{LL}$) of the linear low-density polyethylene can be determined from the DSC curve obtained by carrying out differential scanning calorimetry (DSC) according to JIS K 7122:2012 using a test piece of the linear low-density polyethylene. Specifically, the heat of fusion can be measured according to the method described in the section of Examples.

The melting point ($Tm_{LL}$) of the linear low-density polyethylene is, from the viewpoint of enhancing the mechanical properties of the resultant molded article, preferably 100°C or higher and 130°C or lower. The melting point ($Tm_{LL}$) of the linear low-density polyethylene is more preferably 110°C or higher, still more preferably 116°C or higher, even more preferably 120°C or higher. On the other hand, the melting point ($Tm_{LL}$) of the linear low-density polyethylene is, from the viewpoint of enhancing the in-mold moldability of the expanded beads under a low molding pressure condition, preferably 128°C or lower, more preferably 126°C or lower, still more preferably 124°C or lower.

The melting point ($Tm_{LL}$) of the linear low-density polyethylene is measured based on JIS K 7121:2012, using a test piece of the linear low-density polyethylene. Specifically, the heat of fusion can be measured according to the method described in the section of Examples.

The melt flow rate of the linear low-density polyethylene measured under conditions of a temperature of 190°C and a load of 2.16 kg is preferably 0.1 g/10 min or more and 3 g/10 min or less. When the melt flow rate of the linear low-density polyethylene falls within the range, the in-mold moldability of the expanded beads can be enhanced.

The melt flow rate of the linear low-density polyethylene is more preferably 0.3 g/10 min or more, still more preferably 0.5 g/10 min or more, and even more preferably 0.7 g/10 min or more. The melt flow rate of the linear low-density polyethylene is more preferably 2 g/10 min or less.

Note that the melt flow rate of the linear low-density polyethylene is a value measured under conditions of a temperature of 190°C and a load of 2.16 kg. More specifically, the melt flow rate can be measured according to JIS K 7210-1:2014 by the method described in the section of Examples.

The density of the linear low-density polyethylene is preferably 910 kg/m$^3$ or more and 940 kg/m$^3$ or less, and from the viewpoint of easily producing expanded beads having desired physical properties, more preferably 915 kg/m$^3$ or more and 935 kg/m$^3$ or less, still more preferably 920 kg/m$^3$ or more and 930 kg/m$^3$ or less, even more preferably 922 kg/m$^3$ or more and 928 kg/m$^3$ or less.

The density of the linear low-density polyethylene is measured by Method A (immersion method) described in JIS K 7112:1999.

The linear low-density polyethylene may be linear low-density polyethylene derived from petroleum or linear low-density polyethylene containing a component derived from biomass. Therefore, the biomass degree as measured according to ASTM D 6866 of the linear low-density polyethylene is not limited. In the case where the linear low-density polyethylene is linear low-density polyethylene containing a component derived from biomass, however, the biomass degree may be 10% or more, 20% or more, 30% or more, 50% or more, or 70% or more. Note that the upper limit of the biomass degree is 100%. In the case where the linear low-density polyethylene is linear low-density polyethylene derived from petroleum, the biomass degree of the linear low-density polyethylene as measured according to ASTM D 6866 may be 0%.

From the viewpoint of stably enhancing the in-mold moldability of the expanded beads, the biomass degree of the linear low-density polyethylene is preferably 20% or less, more preferably 10% or less. The linear low-density polyethylene is still more preferably linear low-density polyethylene derived from petroleum.

The linear low-density polyethylene is a copolymer of ethylene and $\alpha$-olefin, having preferably a density of 910 $kg/m^3$ or more and 940 $kg/m^3$ or less and having a linear structure. The linear low-density polyethylene may be a mixture of two or more types of linear low-density polyethylenes. In the case of using a mixture of two types or more of linear low-density polyethylenes as the linear low-density polyethylene, various physical properties such as heat of fusion and melting point of measured for this mixture are adopted as various physical properties such as heat of fusion and melting point of the linear low-density polyethylene. In the case of using a plurality of linear low-density polyethylenes when producing resin particles, each resin is melted and kneaded using, for example, an extruder at a blending ratio of each linear low-density polyethylene at the time of the production of resin particles to prepare a kneaded product for measurement, and various physical properties measured for the kneaded product for measurement are adopted as various physical properties of the linear low-density polyethylene.

The $\alpha$-olefin is preferably an $\alpha$-olefin having 3 to 20 carbon atoms, more preferably an $\alpha$-olefin having 4 to 10 carbon atoms, still more preferably an $\alpha$-olefin having 6 to 8 carbon atoms.

Specific examples of the $\alpha$-olefin include propylene, 1-butene, 1-pentene, 1-hexene, 1-octene, 4-methyl-1-butene, 3,3-dimethyl-1-butene, 4-methyl-1-pentene, 4,4-dimethyl-1-pentene, 2-methylheptene, and 3-ethylhexene. Among these, from the viewpoint of stably producing expanded beads excellent in in-mold moldability, the $\alpha$-olefin preferably includes at least one selected from the group consisting of 1-octene, 1-hexene, and 4-methyl-1-pentene.

Therefore, the linear low-density polyethylene preferably contains, as a main component, linear low-density polyethylene 1, a copolymer containing a component derived from octene in a molecular chain as a copolymerization component (comonomer); or linear low-density polyethylene 2, a copolymer containing a component derived from hexene in a molecular chain as a copolymerization component (comonomer). From the viewpoint of stably producing expanded beads excellent in in-mold moldability, the linear low-density polyethylene preferably contains 50% by mass or more, more preferably 60% by mass or more, and still more preferably 80% by mass or more of the linear low-density polyethylene 1.

In the case where a component derived from octene and a component derived from hexene are contained as copolymerization components, the linear low-density polyethylene 1 and the linear low-density polyethylene 2 are treated as the linear low-density polyethylene 1 if they contain 50 mol% or more of the component derived from octene based on a total of 100 mol% of the component derived from octene and the component derived from hexene.

In addition, the component derived from octene in the linear low-density polyethylene containing a component derived from octene as a copolymerization component includes 1-octene, 2-methylheptene, and 3-ethylhexene, preferably 1-octene. In addition, the component derived from hexene in the linear low-density polyethylene containing a component derived from hexene includes 1-hexene and 4-methyl-1-pentene, preferably 4-methyl-1-pentene.

From the viewpoint of stably producing expanded beads excellent in in-mold moldability, in the case where the linear low-density polyethylene is linear low-density polyethylene 1 containing a component derived from octene, the content of the component derived from octene in the linear low-density polyethylene 1 is preferably 0.5 mol% or more and 5 mol% or less, more preferably 1 mol% or more and 3 mol% or less.

Note that the contents above are contents when the total of the component derived from ethylene and the component derived from an $\alpha$-olefin is set to 100 mol%. The content of the component derived from $\alpha$-olefin in the linear low-density polyethylene is preferably 10 mol% or less, more preferably 8 mol% or less, still more preferably 5 mol% or less, even more preferably 3 mol% or less. The content of the component derived from $\alpha$-olefin in the linear low-density polyethylene is preferably 0.5 mol% or more, more preferably 1 mol% or more.

The content of the component derived from $\alpha$-olefin in the linear low-density polyethylene can be determined, for example, by carbon-13 NMR spectroscopy ($^{13}$C-NMR) measurement, which will be described in the section of Examples.

(Branched low-density polyethylene)

The branched low-density polyethylene is polyethylene having a long-chain branched structure and preferably has a density of 910 $kg/m^3$ or more and less than 930 $kg/m^3$. Note that the branched low-density polyethylene is also simply referred to as "low-density polyethylene" in general, and is indicated by, for example, the abbreviation "PE-LD" in "Plastics-Symbols and abbreviated terms- Part 1: Basic polymers and their special characteristics" of JIS K 6899-1:2015. In addition, the branched low-density polyethylene is generally referred to as high-pressure low-density polyethylene.

The branched low-density polyethylene used to form the mixed resin has a biomass degree of 30% or more as measured according to ASTM D 6866. The heat of fusion is 95 J/g or more.

The use of a mixed resin obtained by kneading the aforementioned linear low-density polyethylene and branched low-density polyethylene having a high heat of fusion and high crystallinity enables the production of expanded beads having excellent in-mold moldability while particularly reducing the shrinkage rate of the molded article.

The branched low-density polyethylene may be a mixture of two or more types of branched low-density polyethylenes. In the case of using a mixture of two types or more of branched low-density polyethylenes as the branched low-density polyethylene, various physical properties such as biomass degree and heat of fusion measured for this mixture are adopted as various physical properties such as biomass degree and heat of fusion of the branched low-density polyethylene. In the case of using a plurality of branched low-density polyethylenes when producing resin particles, each resin is melted and kneaded using, for example, an extruder at a blending ratio of each branched low-density polyethylene at the time of the production of resin particles to prepare a kneaded product for measurement, and various physical properties measured for the kneaded product for measurement are adopted as various physical properties of the branched low-density polyethylene.

When the biomass degree of the branched low-density polyethylene falls within the above range, the use of fossil resources can be suppressed in the production of the molded article, and the amount of carbon dioxide emitted in the life cycle of the molded article can also be reduced.

From the above viewpoint, the biomass degree of the branched low-density polyethylene as measured according to ASTM D 6866 is 30% or more, preferably 50% or more, more preferably 60% or more, still more preferably 80% or more. The upper limit is not limited, and the biomass degree of the branched low-density polyethylene as measured according to ASTM D 6866 may be 100% or less. From the viewpoint of enhancing the in-mold moldability of the expanded beads, however, the biomass degree of the branched low-density polyethylene as measured according to ASTM D 6866 is preferably 99% or less, more preferably 97% or less. The biomass degree is measured according to ASTM D 6866 and means the proportion of naturally-occurring components in the branched low-density polyethylene. In addition, the biomass degree is a value determined by measuring the concentration of radiocarbon $^{14}C$ against the branched low-density polyethylene.

The difference ($D_{LD} - D_{LL}$) between the biomass degree $D_{LD}$ of the branched low-density polyethylene as measured according to ASTM D 6866 and the biomass degree $D_{LL}$ of the linear low-density polyethylene as measured according to ASTM D 6866 is preferably 5% or more. In this case, it is possible to stably produce expanded beads having a desired biomass degree and excellent in-mold moldability.

From the viewpoint of more easily enhancing the in-mold moldability of the expanded beads, the difference ($D_{LD} - D_{LL}$) between the biomass degree $D_{LD}$ of the branched low-density polyethylene as measured according to ASTM D 6866 and the biomass degree $D_{LL}$ of the linear low-density polyethylene as measured according to ASTM D 6866 is more preferably 10% or more, still more preferably 20% or more, even more preferably 30% or more, still even more preferably 50% or more, particularly preferably 70% or more. Note that the upper limit is not limited, and may be 100% or less. The difference ($D_{LD} - D_{LL}$) between the biomass degree $D_{LD}$ of the branched low-density polyethylene as measured according to ASTM D 6866 and the biomass degree $D_{LL}$ of the linear low-density polyethylene as measured according to ASTM D 6866 may be 99% or less, or 98% or less.

The heat of fusion ($\Delta H_{LD}$) of the branched low-density polyethylene is 95 J/g or more. From the viewpoint of obtaining expanded beads capable of stably producing a molded article with a low shrinkage rate while enhancing the in-mold moldability of the expanded beads, the heat of fusion ($\Delta H_{LD}$) of the branched low-density polyethylene is preferably 100 J/g or more, more preferably 102 J/g or more. Also, the heat of fusion ($\Delta H_{LD}$) of the branched low-density polyethylene is preferably 120 J/g or less, more preferably 115 J/g or less.

The heat of fusion ($\Delta H_{LD}$) of the branched low-density polyethylene can be determined from the DSC curve obtained by carrying out differential scanning calorimetry (DSC) according to JIS K 7122:2012 using a test piece of the branched low-density polyethylene. Specifically, the heat of fusion can be measured according to the method described in the section of Examples.

The difference ($\Delta H_{LL} - \Delta H_{LD}$) between the heat of fusion ($\Delta H_{LL}$) of the linear low-density polyethylene and the heat of fusion ($\Delta H_{LD}$) of the branched low-density polyethylene is preferably 0 J/g or more and 30 J/g or less. The difference ($\Delta H_{LL} - \Delta H_{LD}$) between the heat of fusion ($\Delta H_{LL}$) of the linear low-density polyethylene and the heat of fusion ($\Delta H_{LD}$) of the branched low-density polyethylene is more preferably 1 J/g or more, still more preferably 2 J/g or more. The ($\Delta H_{LL} - \Delta H_{LD}$) is more preferably 20 J/g or less, still more preferably 15 J/g or less, even more preferably 8 J/g or less. In this case, it is possible to stably produce expanded beads having excellent in-mold moldability and capable of molding a molded article with a low shrinkage rate while achieving expanded beads having a desired biomass degree.

The melt flow rate of the branched low-density polyethylene measured under conditions of a temperature of 190°C and a load of 2.16 kg is preferably 0.1 g/10 min or more and 3 g/10 min or less. When the melt flow rate of the branched low-density polyethylene falls within the range, the in-mold moldability of the expanded beads can be enhanced.

The melt flow rate of the branched low-density polyethylene is preferably 0.1 g/10 min or more, more preferably 0.3 g/10 min or more. The melt flow rate of the branched low-density polyethylene is preferably 3 g/10 min or less, more preferably 2 g/10 min or less, still more preferably 0.8 g/10 min or less.

Note that the melt flow rate of the branched low-density polyethylene is a value measured under conditions of a temperature of 190°C and a load of 2.16 kg. More specifically, the melt flow rate can be measured according to JIS K 7210-1:2014 by the method described in the section of Examples.

The density of the branched low-density polyethylene is preferably 910 $kg/m^3$ or more and less than 930 $kg/m^3$, and from the viewpoint of easily producing expanded beads having desired physical properties, more preferably 915 $kg/m^3$ or more and 929 $kg/m^3$ or less, still more preferably 920 $kg/m^3$ or more and 928 $kg/m^3$ or less, even more preferably 921 $kg/m^3$ or more and 927 $kg/m^3$ or less, particularly preferably 922 $kg/m^3$ or more and 926 $kg/m^3$ or less.

The density of the branched low-density polyethylene is measured by Method A (immersion method) described in JIS K 7112:1999.

The difference (absolute value) between the density of the linear low-density polyethylene and the density of the branched low-density polyethylene is preferably 5 $kg/m^3$ or less, more preferably 4 $kg/m^3$ or less, still more preferably 3 $kg/m^3$ or less. The lower limit is not limited, and may be 0 $kg/m^3$ or more, or 1 $kg/m^3$ or more.

The melting point ($Tm_{LD}$) of the branched low-density polyethylene is, from the viewpoint of enhancing the mechanical properties of the resultant molded article, preferably 100°C or higher, more preferably 105°C or higher. On the other hand, the melting point ($Tm_{LD}$) of the branched low-density polyethylene is, from the viewpoint of enhancing the in-mold moldability of the expanded beads under a low molding pressure condition, preferably 120°C or lower, more preferably 118°C or lower, still more preferably 116°C or lower.

The melting point ($Tm_{LD}$) of the branched low-density polyethylene is measured based on JIS K 7121:2012, using a test piece of the branched low-density polyethylene. Specifically, the melting point can be measured according to the method described in the section of Examples.

The difference ($Tm_{LL}$ - $Tm_{LD}$) between the melting point ($Tm_{LL}$) of the linear low-density polyethylene and the melting point ($Tm_{LD}$) of the branched low-density polyethylene is preferably 5°C or higher and 15°C or lower. When the expanded beads are composed of a mixed resin of linear low-density polyethylene and branched low-density polyethylene in which the difference in melting point falls within a specific range, it is possible to stably produce expanded beads having a desired biomass degree and excellent in-mold moldability. The ($Tm_{LL}$ - $Tm_{LD}$) is more preferably 6°C or higher, still more preferably 8°C or higher.

<Properties of mixed resin and polyethylene-based resin particles>

The mixed resin constituting the resin particles is obtained by kneading the linear low-density polyethylene and the branched low-density polyethylene. From the viewpoint of stably producing expanded beads excellent in in-mold moldability with a wide molding range to yield, particularly, a molded article having a small shrinkage rate, it is preferable that the linear low-density polyethylene is the linear low-density polyethylene 1.

The blending amount of the branched low-density polyethylene in the mixed resin is 5% by mass or more and less than 40% by mass, where the total of the linear low-density polyethylene and the branched low-density polyethylene is 100% by mass, and the heat of fusion of the polyethylene-based resin particles is 90 J/g or more.

The blending amount of the branched low-density polyethylene in the mixed resin is 5% by mass or more and less than 40% by mass, where a total of the linear low-density polyethylene and the branched low-density polyethylene is 100% by mass.

The use of the mixed resin obtained by kneading the linear low-density polyethylene and the specific branched low-density polyethylene described above enables the production of expanded beads having excellent in-mold moldability while particularly reducing the shrinkage rate of the molded article.

From the viewpoint of lowering the shrinkage rate of the molded article while increasing a biomass degree of the expanded beads, the blending amount of the branched low-density polyethylene is 5% by mass or more, preferably 10% by mass or more, more preferably 15% by mass or more, still more preferably 20% by mass or more, where the total of the linear low-density polyethylene and the branched low-density polyethylene is 100% by mass. From the viewpoint of easily enhancing the in-mold moldability of the expanded beads, the blending amount of the branched low-density polyethylene is less than 40% by mass, preferably 38% by mass or less, more preferably 35% by mass or less, still more preferably 32% by mass or less, even more preferably 30% by mass or less, where the total of the linear low-density polyethylene and the branched low-density polyethylene is 100% by mass.

The mixed resin constituting the resin particles may contain a polymer such as a resin or an elastomer other than the linear low-density polyethylene and the branched low-density polyethylene within a range not detracting from the advantageous effects of the present invention. In this case, the content of the other polymer than the linear low-density polyethylene and the branched low-density polyethylene in the mixed resin is preferably 40 parts by mass or less, more preferably 30 parts by mass or less, still more preferably 20 parts by mass or less, even more preferably 10 parts by mass or less, particularly preferably 5 parts by mass or less, based on a total of 100 parts by mass of the linear low-density polyethylene and the branched low-density polyethylene.

The resin particles preferably has a biomass degree of 5% or more as measured according to ASTM D 6866.

When the biomass degree of the resin particles falls within the above range, the use of fossil resources can be suppressed in the production of the molded article, and the amount of carbon dioxide emitted in the life cycle of the molded article can also be reduced.

From the above viewpoint, the biomass degree of the resin particles as measured according to ASTM D 6866 is more preferably 10% or more, still more preferably 15% or more, even more preferably 20% or more. The upper limit is not limited, and the biomass degree of the resin particles as measured according to ASTM D 6866 may be 100% or less. From the viewpoint of easily enhancing the in-mold moldability of the expanded beads, however, the biomass degree of the resin particles as measured according to ASTM D 6866 is preferably 90% or less, more preferably 80% or less, still more preferably 50% or less, even more preferably 40% or less. The biomass degree is measured according to ASTM D 6866 and means the proportion of naturally-occurring components in the resin particles. The biomass degree can be calculated by measuring the concentration of radiocarbon $^{14}$C against the resin particles or expanded beads, or from the biomass degree of biomass-derived resin used to produce the resin particles or expanded beads and the content proportion of biomass-derived resin in the resin particles or expanded beads.

From the viewpoint of obtaining a molded article that is less likely to be excessively deformed by stress, the flexural modulus of the mixed resin constituting the resin particles is preferably 200 MPa or more. The flexural modulus of the mixed resin is more preferably 210 MPa or more, still more preferably 220 MPa or more. The upper limit of the flexural modulus of the mixed resin is not specifically limited so far as it falls within a range capable of attaining the intended object of the present invention, but is preferably 300 MPa or less, more preferably 280 MPa or less. By setting the flexural modulus of the mixed resin within the above range, it is possible to obtain a molded article which is less likely to be excessively deformed by stress, while the resultant expanded beads have excellent moldability.

The flexural modulus of the mixed resin is determined by heat-pressing the resin particles to prepare a sheet-shaped test piece having a predetermined dimension and measuring the flexural modulus of the test piece based on JIS K 7171:2016.

Since the flexural modulus of the mixed resin constituting the resin particles usually corresponds to the flexural modulus of the mixed resin constituting the expanded beads obtained by expanding the resin particles, the flexural modulus of the mixed resin constituting the expanded beads described later may be adopted as the flexural modulus of the mixed resin constituting the resin particles.

The polyethylene-based resin particles composed of the resin particles for use in the method for producing the expanded beads of the present invention can be obtained by feeding the linear low-density polyethylene, the branched low-density polyethylene, and other optional additives such as a cell controlling agent into an extruder, heating and kneading them to give a resin melt, and thereafter extruding the resin melt out of the extruder, while pelletizing it in a strand cutting system, a hot cutting system or an underwater cutting system. In other words, the mixed resin constituting the resin particles is obtained by kneading the linear low-density polyethylene and the branched low-density polyethylene.

The average mass per one particle of the resin particles is preferably controlled to 0.1 to 20 mg, more preferably 0.2 to 10 mg, still more preferably 0.3 to 5 mg, and even more preferably 0.4 to 2 mg. The outer shape of the particles is not specifically limited so far as it falls within a range capable of attaining the intended object of the present invention, but is preferably columnar.

In the case where the outer shape of the resin particles is columnar, the particle diameter (length in the extrusion direction) of the resin particles is preferably 0.1 to 3.0 mm, more preferably 0.3 to 1.5 mm. The ratio of the length in the extrusion direction of the resin particles to the length in the direction perpendicular to the extrusion direction of the resin particles (diameter of the resin particles), ratio of length/diameter is preferably 0.5 to 5.0, more preferably 1.0 to 3.0.

In the case of pelletizing by a strand cutting method, the particle diameter, the ratio of length/diameter and the average mass of the resin particles can be controlled by appropriately changing the extrusion rate in extruding the resin melt, the take-up rate of the strand, and the cutter speed in cutting the strand.

Additives may be appropriately contained in the mixed resin constituting the resin particles within a range not detracting from the advantageous effects of the present invention. Examples of the additives include an antioxidant, a UV absorbent (ultraviolet absorbing agent), an antistatic agent, a flame retardant, a pigment, a dye and a cell controlling agent. For example, these additives can be contained in the expanded beads by adding them to the resin particles in a step of producing the resin particles.

Examples of the cell controlling agent usable include an inorganic powder and an organic powder. Examples of the inorganic powder include a metal borate such as zinc borate and magnesium borate. The organic powder includes a fluorine resin powder such as polytetrafluoroethylene (PTFE).

From the viewpoint of stably producing expanded beads having a desired bulk density and having a less fluctuating cell diameter, the blending amount of the cell controlling agent in the resin particles is preferably 50 ppm by mass or more and 5000 ppm by mass or less, more preferably 100 ppm by mass or more and 2000 ppm by mass or less, still more preferably 150 ppm by mass or more and 1500 ppm by mass or less.

From the viewpoint of easily controlling the average cell diameter of the expanded beads to fall within a desired range, a metal borate is preferably used as the cell controlling agent, and zinc borate is more preferred. In the case of using zinc borate, the arithmetic average particle diameter by number is preferably 0.5 $\mu$m or more and 10 $\mu$m or less, more preferably 1 $\mu$m or more and 8 $\mu$m or less.

The arithmetic average particle diameter by number of zinc borate can be determined by converting the particle diameter distribution by volume as measured according to a laser diffraction scattering method to a particle diameter distribution by number, on the assumption that the shape of the particles is spherical, to give a particle diameter distribution by number, and arithmetically averaging the particle diameter based on the particle diameter distribution by number. The particle diameter means a diameter of a hypothetical sphere having the same volume as that of the particle.

The total heat of fusion of the polyethylene-based resin particles for use in the method for producing the polyethylene-based resin expanded beads of the present invention is 90 J/g or more.

When the resin particles are composed of a mixed resin of linear low-density polyethylene and branched low-density polyethylene and the total heat of fusion of the resin particles falls within the above range, it is possible to produce expanded beads having excellent in-mold moldability and capable of molding a molded article with a low shrinkage rate. The total heat of fusion of the resin particles is preferably 100 J/g or more, more preferably 105 J/g or more, still more preferably 110 J/g or more.

The upper limit of the total heat of fusion of the resin particles is not specifically limited so far as it falls within a range capable of attaining the intended object of the present invention, but is preferably 140 J/g or less, more preferably 130 J/g or less.

The total heat of fusion of the resin particles can be determined from the DSC curve obtained by carrying out differential scanning calorimetry (DSC) according to JIS K 7122:2012 using a test piece of the resin particles. Specifically, for condition control of the test piece, "(2) a case of measuring a melting temperature after predetermined heat treatment" is first employed, in which a test piece is heated from 23°C to 200°C at a heating rate of 10°C/min, then cooled them from 200°C to 23°C at a rate of 10°C/min after reaching 200°C, and again heated them from 23°C to 200°C at a rate of 10°C/min to draw a DSC curve (DSC curve at the time of second heating). The point at a temperature of 80°C on the obtained DSC curve at the time of second heating is defined as $\alpha$, and the point on the DSC curve corresponding to the end temperature of melting is defined as $\beta$. The area of the part surrounded by the DSC curve at an interval between the point $\alpha$ and the point $\beta$ and the line segment ($\alpha$-$\beta$) is measured, and the total heat of fusion of the resin particles can be calculated from the area.

Since the total heat of fusion of the resin particles usually corresponds to the total heat of fusion of the expanded beads obtained by expanding the resin particles, the total heat of fusion of the expanded beads described later may be adopted as the total heat of fusion of the resin particles.

The melting point of the polyethylene-based resin particles for use in the method for producing the polyethylene-based resin expanded beads of the present invention is, from the viewpoint of easily enhancing the mechanical properties of the resultant molded articles while enhancing the in-mold moldability of the expanded beads, preferably 115°C or higher and 130°C or lower. The melting point of the resin particles is more preferably 116°C or higher, still more preferably 118°C or higher. On the other hand, the melting point of the resin particles is, from the viewpoint of enhancing the in-mold moldability of the expanded beads under a low molding pressure condition, preferably 128°C or lower, more preferably 125°C or lower.

The melting point of the resin particles is measured based on JIS K 7121:2012 by using a test piece of the resin particles thereof. Specifically, the melting point can be measured according to the method described in the section of Examples.

Since the melting point of the resin particles usually corresponds to the melting point of the expanded beads obtained by expanding the resin particles, the melting point of the expanded beads described later may be adopted as the melting point of the resin particles.

The melt flow rate of the mixed resin constituting polyethylene-based resin particles measured under conditions of a temperature of 190°C and a load of 2.16 kg is preferably 0.1 g/10 min or more and 3 g/10 min or less. When the melt flow rate of the resin particles falls within the above range, the in-mold moldability of the resultant expanded beads can be enhanced.

The melt flow rate of the mixed resin is more preferably 0.2 g/10 min or more, still more preferably 0.4 g/10 min or more, even more preferably 0.5 g/10 min or more. The melt flow rate of the mixed resin is more preferably 2.0 g/10 min or less, still more preferably 1.5 g/10 min or less, even more preferably 1.2 g/10 min or less.

Note that the melt flow rate of the mixed resin is a value measured according to JIS K 7210-1:2014 under conditions of a temperature of 190°C and a load of 2.16 kg. The melt flow rate of the mixed resin constituting the resin particles roughly corresponds to the melt flow rate of the mixed resin constituting the expanded beads obtained by expanding the resin particles.

As described above, the specific expanded beads obtained by expanding the resin particles obtained by kneading the branched low-density polyethylene having a specific heat of fusion with the linear low-density polyethylene in a specific blending amount can produce a molded article having a low shrinkage rate.

Although it is not clear why a molded article having a low shrinkage rate can be produced in the present invention, the following reasons are considered.

It is considered that the branched low-density polyethylene used in the present invention has a lower melting point and is more likely to be softened than the linear low-density polyethylene, while having a relatively high heat of fusion and high crystallinity. It is considered that expanded beads formulated with such branched low-density polyethylene allow the mixed resin constituting the expanded beads to be moderately stretched during molding, while the crystalline component increases the resistance to shrinkage during cooling and solidification of the mixed resin. Accordingly, it is considered that a molded article having a low shrinkage rate can be obtained while maintaining the moldability of the expanded beads.

<Production of polyethylene-based resin expanded beads>

The method for producing polyethylene-based resin expanded beads of the present invention may be a method for producing polyethylene-based resin expanded beads by expanding the above-described resin particles composed of a mixed resin. The method for producing expanded beads of the present invention is, for example, a method of impregnating resin particles composed of a mixed resin of linear low-density polyethylene and branched low-density polyethylene with a blowing agent and expanding the resin particles containing the blowing agent. The method of expanding the resin particles to be employed may involve heating the resin particles containing a blowing agent with a heating medium such as steam, or by opening the resin particles containing a blowing agent held under a predetermined temperature and pressure atmosphere to a pressure atmosphere lower than the aforementioned pressure atmosphere. One preferred example of the production method is described below.

A preferred method for producing the expanded beads of the present invention is a method for producing expanded beads by expanding the resin particles, the method including discharging resin particles that contain a blowing agent as dispersed in an aqueous medium in a vessel from the vessel to under a pressure atmosphere lower than the pressure inside the vessel along with the aqueous medium to expand the resin particles.

More specifically, the production method includes a dispersion step of dispersing the resin particles composed of a mixed resin of linear low-density polyethylene and branched low-density polyethylene in an aqueous medium in a vessel, a blowing agent impregnation step of impregnating a blowing agent in the resin particles in the vessel, and an expanding step of discharging the blowing agent-containing resin particles out of the vessel along with the aqueous medium into an atmosphere with a pressure lower than the pressure inside the vessel to expand the resin particles.

A preferred production method for the expanded beads of the present invention includes a dispersion step of dispersing the resin particles in an aqueous medium in a vessel, a blowing agent impregnation step of impregnating a blowing agent in the resin particles in the vessel, and an expanding step of discharging the blowing agent-containing resin particles out of the vessel along with the aqueous medium into an atmosphere with a pressure lower than the pressure inside the vessel to expand the resin particles. Preferably, these steps are carried out in this order, more preferably, these steps are carried out as a series of steps. Note that the method of expansion through this series of steps is also referred to as a dispersing medium-discharging expanding method.

As the dispersing medium for dispersing the resin particles obtained in the manner as above, in a closed vessel, an aqueous dispersing medium is preferably used in the dispersion step. The aqueous dispersing medium is a dispersing medium that contains water as a main component. The proportion of water in the aqueous dispersing medium is preferably 70% by mass or more, more preferably 80% by mass or more, even more preferably 90% by mass or more, and may be 100% by mass. The other dispersing medium than water in the aqueous dispersing medium includes ethylene glycol, glycerin, methanol and ethanol.

In the dispersing medium-discharging expanding method, which is favorably employed in the present invention, preferably, a dispersant is added to the dispersing medium, so that the resin particles heated in the vessel do not fuse with one another in the vessel. The dispersant may be any one capable of preventing resin particles from fusing in a vessel. However, use of an inorganic dispersant may be preferred. Examples of the inorganic dispersant include a natural or synthetic clay mineral such as kaolin, mica and clay, and aluminum oxide, titanium oxide, basic magnesium carbonate, basic zinc carbonate, calcium carbonate and iron oxide. One or more of these may be used either singly or as combined. Among them, a natural or synthetic clay mineral is preferred. The amount of the dispersant to be added is preferably 0.001 to 5 parts by mass per 100 parts by mass of the resin particles.

In the case where the dispersant is used, preferably, an anionic surfactant such as sodium dodecylbenzenesulfonate, sodium alkylsulfonate or sodium oleate is used together therewith, as an auxiliary dispersant. Preferably, the auxiliary dispersant is added in an amount of approximately 0.001 to 1 part by mass per 100 parts by mass of the resin particles.

In the blowing agent impregnation step, the blowing agent for use for expanding the resin particles is preferably a physical blowing agent. Examples of the physical blowing agent include an inorganic physical blowing agent and an organic physical blowing agent. Examples of the inorganic physical blowing agent include carbon dioxide, air, nitrogen, helium and argon. Examples of the organic physical blowing agent include an aliphatic hydrocarbon such as propane, n-butane, isobutane, n-pentane, isopentane, and hexane; a cycloaliphatic hydrocarbon such as cyclopentane and cyclohexane; and a halogenated hydrocarbon such as ethyl chloride, 2,3,3,3-tetrafluoropropene, trans-1,3,3,3-tetrafluoropropene, and trans-1-chloro-3,3,3-trifluoropropene. The physical blowing agent may be used alone or in combination of two or more thereof. An inorganic physical blowing agent and an organic physical blowing agent may be used in combination. The blowing agent for use in the present production method is, from the viewpoint of facilitating the production of the desired expanded beads, preferably an inorganic physical blowing agent, more preferably carbon dioxide.

Although the amount of the blowing agent added is determined in consideration of the desired bulk density of the expanded beads, the type of the blowing agent, and other factors, in the case of using a physical blowing agent, for example, the amount of the physical blowing agent to be added is preferably 0.1 to 30 parts by mass, more preferably 0.5 to 15 parts by mass, relative to 100 parts by mass of the resin particles.

The method for impregnating the blowing agent in the resin particles in the expanded beads production step is preferably a method including dispersing the resin particles in an aqueous dispersing medium in a closed vessel while injecting a blowing agent under pressure into the closed vessel, and heating, pressurizing, and holding the closed vessel to thereby impregnate the blowing agent in the resin particles, for example.

In the expanding step, the pressure (inner pressure) inside the closed vessel during expanding is preferably 0.5 MPa (G) or more, more preferably 0.8 MPa (G) or more, still more preferably 1.0 MPa (G) or more, even more preferably 2.0 MPa (G) or more, still even more preferably 3.0 MPa (G) or more. The upper limit is preferably 5.0 MPa (G) or less, more preferably 4.5 MPa (G) or less. Within the above range, desired expanded beads can be safely produced with no risk of breakage or explosion of the closed vessel. Also preferably, the closed vessel is heated preferably from 100 to 200°C, more preferably from 110 to 140°C, and then kept at the temperature for approximately 5 to 30 minutes, and thereafter the blowing agent-containing resin particles are taken out of the closed vessel and discharged into an atmosphere having a lower pressure than the inner pressure inside the closed vessel (for example, an atmospheric pressure) to expand the resin particles.

The expanded particles having a crystal structure where an intrinsic peak and a high-temperature peak appear on a first DSC curve, which is drawn by heating 1 to 3 mg of expanded beads from 23°C to 200°C at a heating rate of 10°C/min using a differential scanning calorimeter, can be produced, for example, as follows:

First, the resin particle dispersed in the dispersing medium in the closed vessel is heated to a temperature of (melting point of the mixed resin constituting the resin particle - 15°C) to (melting point of the mixed resin constituting the resin particle + 10°C) and also held at this temperature for a sufficient time, preferably for about 10 to 60 minutes (holding step). Next, by expanding the resin particle that has undergone this holding step, an expanded bead exhibiting the melting peak described above can be obtained.

In the production of expanded beads, the resin particles that have undergone the holding step may be prepared in advance, and the expanded beads may be obtained by expanding the resin particles that have undergone the holding step. For example, as a part of the dispersing step or the blowing agent impregnation step, the holding step may be carried out on the resin particles, and the resin particles that have undergone the holding step may be expanded to produce expanded beads.

From the viewpoint of enhancing the productivity of the expanded bead, it is preferable to heat the resin particle dispersed in the dispersing medium in the closed vessel in the presence of the blowing agent and carry out the above holding step, and then release the contents of the closed vessel from the inside of the closed vessel into an atmosphere with a pressure lower than the pressure inside the closed vessel to expand the resin particles that have undergone the holding step, thereby giving an expanded bead exhibiting the melting peak described above.

The expanded beads obtained in the manner as above can be expanded in multiple stages to give expanded beads with a higher expansion ratio (lower bulk density). For example, the expanded beads can be pressurized by air or the like to increase the pressure (inner pressure) inside the cells of the expanded beads, and then heated with steam or the like and further expanded (second-stage expansion) to give expanded beads having a higher expansion ratio (lower bulk density). From the viewpoint of producing a molded article having a low density, it is preferable to carry out second-stage expansion.

<Polyethylene-based resin expanded beads produced by production method>

The polyethylene-based resin expanded beads produced by the method for producing polyethylene-based resin expanded beads of the present invention are preferably polyethylene-based resin expanded beads described in the section of [Polyethylene-based resin expanded beads] below, and the same applies to more preferred polyethylene-based resin expanded beads.

The polyethylene-based resin expanded beads have a biomass degree of 5% or more as measured according to ASTM D 6866.

When the biomass degree of the expanded beads falls within the above range, the use of fossil resources can be suppressed in the production of the molded article, and the amount of carbon dioxide emitted in the life cycle of the molded article can also be reduced.

From the above viewpoint, the biomass degree of the expanded beads as measured according to ASTM D 6866 is preferably 10% or more, more preferably 15% or more, still more preferably 20% or more. The upper limit is not limited, and the biomass degree of the expanded beads as measured according to ASTM D 6866 may be 100% or less. From the viewpoint of easily enhancing the in-mold moldability of the expanded beads, however, the biomass degree of the expanded beads as measured according to ASTM D 6866 is preferably 90% or less, more preferably 80% or less, still more preferably 50% or less, even more preferably 30% or less. The biomass degree is measured according to ASTM D 6866 and means the proportion of naturally-occurring components in the expanded beads. The biomass degree can be calculated by measuring the concentration of radiocarbon $^{14}C$ against the linear low-density polyethylene or from the biomass degree of biomass-derived resin used to produce the expanded beads and the content proportion of biomass-derived resin in the expanded beads.

[Polyethylene-based resin expanded beads]

The polyethylene-based resin expanded beads of the present invention are polyethylene-based resin expanded beads composed of a mixed resin of linear low-density polyethylene and branched low-density polyethylene, wherein the mixed resin has a flexural modulus of 200 MPa or more; the expanded bead has a biomass degree of 5% or more as measured according to ASTM D 6866; and the total heat of fusion of the expanded beads is 90 J/g or more.

The polyethylene-based resin expanded beads of the present invention are preferably produced by the above-described method for producing polyethylene-based resin expanded beads, and the method for producing polyethylene-based resin expanded beads of the present invention is preferably the above-described method for producing polyethylene-based resin expanded beads. A more preferred production method is also the same. The expanded beads described in the section of [Polyethylene-based resin expanded beads] of the present invention are preferably expanded beads produced by the [Method for producing polyethylene-based resin expanded beads], and the same applies to more preferred expanded beads.

(Mixed resin)

The polyethylene-based resin expanded beads are composed of a mixed resin of linear low-density polyethylene and branched low-density polyethylene.

The mixed resin of the linear low-density polyethylene and the branched low-density polyethylene, which constitutes the polyethylene-based resin expanded beads of the present invention, is preferably the mixed resin described in the section <Mixed resin> of [Method for producing polyethylene-based resin expanded beads] described in the above-described method for producing expanded beads. Therefore, the mixed resin is preferably a mixed resin obtained by kneading the linear low-density polyethylene and the branched low-density polyethylene.

Therefore, the mixed resin is preferably a mixed resin including branched low-density polyethylene and linear low-density polyethylene, wherein the branched low-density polyethylene has a biomass degree of 30% or more as measured according to ASTM D 6866; the heat of fusion of the branched low-density polyethylene is 95 J/g or more; and the blending amount of the branched low-density polyethylene is 5% by mass or more and less than 40% by mass, where the total of the linear low-density polyethylene and the branched low-density polyethylene is 100% by mass.

In addition, from the viewpoint of stably producing expanded beads excellent in in-mold moldability with a wide molding range to yield a good molded article, it is preferable that the linear low-density polyethylene is the linear low-density polyethylene containing an octene component as a copolymerization component (comonomer).

From the viewpoint of obtaining a molded article that is less likely to be excessively deformed by stress, the flexural modulus of the mixed resin constituting the expanded beads is preferably 200 MPa or more.

The flexural modulus of the mixed resin is more preferably 210 MPa or more, still more preferably 220 MPa or more. The upper limit of the flexural modulus of the mixed resin is not specifically limited so far as it falls within a range capable of attaining the intended object of the present invention, but is preferably 300 MPa or less, more preferably 280 MPa or less. By setting the flexural modulus of the mixed resin within the above range, it is possible to obtain a molded article which is less likely to be excessively deformed by stress, while the resultant expanded beads have excellent moldability.

The flexural modulus of the mixed resin is determined by heat-pressing the expanded beads to prepare a sheet-shaped test piece having a predetermined dimension and measuring the flexural modulus of the test piece based on JIS K 7171:2016.

The polyethylene-based resin expanded beads are composed of a mixed resin of linear low-density polyethylene and branched low-density polyethylene, and the blending amount of the branched low-density polyethylene in the mixed resin is preferably 5% by mass or more and less than 40% by mass, where the total of the linear low-density polyethylene and the branched low-density polyethylene is 100% by mass.

The use of a mixed resin obtained by kneading branched low-density polyethylene having a high heat of fusion and high crystallinity with the aforementioned linear low-density polyethylene enables the production of expanded beads having excellent in-mold moldability while particularly reducing the shrinkage rate of the molded article.

From the viewpoint of increasing a biomass degree and lowering the shrinkage rate of the molded article, the blending amount of the branched low-density polyethylene is preferably 5% by mass or more, more preferably 7% by mass or more, still more preferably 10% by mass or more, even more preferably 20% by mass or more, where the total of the linear low-density polyethylene and the branched low-density polyethylene is 100% by mass. From the viewpoint of easily enhancing the in-mold moldability of the expanded beads, the blending amount of the branched low-density polyethylene is preferably less than 40% by mass, more preferably 38% by mass or less, still more preferably 35% by mass or less, even more preferably 32% by mass or less, still even more preferably 30% by mass or less, where the total of the linear low-density polyethylene and the branched low-density polyethylene is 100% by mass.

<Properties and composition of polyethylene-based resin expanded beads>

As described above, the expanded beads of the present invention are composed of a mixed resin of linear low-density polyethylene and branched low-density polyethylene, wherein the mixed resin has a flexural modulus of 200 MPa or more; the expanded beads have a biomass degree of 5% or more as measured according to ASTM D 6866; and the heat of fusion of the expanded beads is 90 J/g or more, and preferably have the following properties.

The expanded beads have a biomass degree of 5% or more as measured according to ASTM D 6866.

When the biomass degree of the expanded beads falls within the above range, the use of fossil resources can be suppressed in the production of the molded article, and the amount of carbon dioxide emitted in the life cycle of the molded article can also be reduced.

From the above viewpoint, the biomass degree of the expanded beads as measured according to ASTM D 6866 is preferably 10% or more, more preferably 15% or more, still more preferably 20% or more. The upper limit is not limited, and the biomass degree of the expanded beads as measured according to ASTM D 6866 may be 100% or less. From the viewpoint of easily enhancing the in-mold moldability of the expanded beads, however, the biomass degree of the expanded beads as measured according to ASTM D 6866 is preferably 90% or less, more preferably 80% or less, still more preferably 50% or less, even more preferably 30% or less. The biomass degree is measured according to ASTM D 6866 and means the proportion of naturally-occurring components in the expanded beads. The biomass degree can be calculated by measuring the concentration of radiocarbon $^{14}$C against the expanded beads or from the biomass degree of biomass-derived resin used to produce the expanded beads and the content proportion of biomass-derived resin in the expanded beads.

The total heat of fusion of the polyethylene-based resin expanded beads of the present invention is 90 J/g or more.

When the expanded beads are composed of a mixed resin of linear low-density polyethylene and branched low-density polyethylene and the total heat of fusion of the expanded beads falls within the above range, it is possible to produce expanded beads having excellent in-mold moldability and capable of molding a molded article with a low shrinkage rate.

The total heat of fusion of the expanded beads is preferably 100 J/g or more, more preferably 105 J/g or more, still more preferably 110 J/g or more. The upper limit of the total heat of fusion of the expanded beads is not specifically limited so far as it falls within a range capable of attaining the intended object of the present invention, but is preferably 140 J/g or less, more preferably 130 J/g or less.

The total heat of fusion of the expanded beads can be determined from the DSC curve obtained by carrying out differential scanning calorimetry (DSC) according to JIS K 7122:2012 using a test piece of the expanded beads thereof. Specifically, for condition control of the test piece, "(2) a case of measuring a melting temperature after predetermined heat treatment" is first employed, in which a test piece is heated from 23°C to 200°C at a heating rate of 10°C/min, then cooled them from 200°C to 23°C at a rate of 10°C/min after reaching 200°C, and again heated them from 23°C to 200°C at a rate of 10°C/min to draw a DSC curve (DSC curve at the time of second heating). The point at a temperature of 80°C on the obtained DSC curve at the time of second heating is defined as $\alpha$, and the point on the DSC curve corresponding to the end temperature of melting is defined as $\beta$. The area of the part surrounded by the DSC curve at an interval between the point $\alpha$ and the point $\beta$ and the line segment ($\alpha$-$\beta$) is measured, and the total heat of fusion of the expanded beads can be calculated from the area.

The polyethylene-based resin expanded beads preferably have a crystal structure where a melting peak intrinsic to the mixed resin (intrinsic peak) and at least one melting peak on a higher temperature side than the intrinsic peak (high-temperature peak) appear on a DSC curve drawn by heating the expanded beads from 23°C to 200°C at a heating rate of 10°C/min.

The DSC curve is a DSC curve drawn in differential scanning calorimetry (DSC) according to JIS K 7122:2012. Specifically, using a differential scanning calorimeter, 1 to 3 mg of expanded beads are heated from 23°C to 200°C at a heating rate of 10°C/min to draw the DSC curve.

As described above, a melting peak intrinsic to the mixed resin (intrinsic peak) and at least one melting peak on a higher temperature side than the intrinsic peak (high-temperature peak) appear on the DSC curve drawn by measurement of the expanded beads.

The description is given in more detail below.

The DSC curve means a DSC curve (DSC curve in the first heating) drawn by heating the expanded beads according to the above-mentioned measurement method. The melting peak intrinsic to the mixed resin (intrinsic peak) refers to a melting peak that appears by melting of crystals that the mixed resin of the linear low-density polyethylene and branched low-density polyethylene generally has.

On the other hand, the melting peaks (high-temperature peaks) on the high-temperature side than the intrinsic peaks are melting peaks appearing on the higher temperature side than the intrinsic peaks on the DSC curve in the first heating. In the case where the high-temperature peaks appear, it is presumed that secondary crystals are present in the resin. On the DSC curve (DSC curve in the second heating) drawn by heating the expanded beads from 23°C to 200°C at a heating rate of 10°C/min (first heating), then cooling them from 200°C to 23°C at a cooling rate of 10°C/min, and thereafter again heating them from 23°C to 200°C at a heating rate of 10°C/min (second heating), only a melting peak appears by melting of crystal that the mixed resin generally has. With that, it can be confirmed that which peak is the intrinsic peak.

The expanded beads are preferably expanded beads in which only a melting peak intrinsic to the mixed resin (intrinsic peak) appears on the DSC curve in the second heating drawn by heating the expanded beads from 23°C to 200°C at a heating rate of 10°C/min, then cooling them from 200°C to 23°C at a cooling rate of 10°C/min, and thereafter heating them from 23°C to 200°C at a heating rate of 10°C/min.

The heat of fusion at the high-temperature peak of the expanded beads is preferably 10 J/g or more and 50 J/g or less. When the heat of fusion at the high-temperature peak of the expanded beads falls within the above range, the in-mold moldability of the expanded beads can be enhanced even in the case of expanded beads having a low bulk density, and the expanded beads can be obtained in a wide molding pressure range capable of in-mold molding. As a result, a good molded article can be obtained over a wide density range.

The heat of fusion at the high-temperature peak of the expanded beads is preferably 15 J/g or more, more preferably 20 J/g or more, from the viewpoint of suppressing sink marks of the molded article immediately after molding and enhancing in-mold moldability of the expanded beads, or from the viewpoint of stably suppressing shrinkage of second-stage expanded beads upon second-stage expansion of the expanded beads. The heat of fusion at the high-temperature peak of the expanded beads is preferably 45 J/g or less, more preferably 40 J/g or less, still more preferably 35 J/g or less, from the viewpoint of improving the fusion-bonding properties of the expanded beads under low molding pressure conditions, enhancing the in-mold moldability of the expanded beads, and easily producing expanded beads having a lower bulk density upon second-stage expansion of the expanded beads.

The heat of fusion at the high-temperature peak can be determined by heat flux differential scanning calorimetry according to JIS K 7122:2012 using a test piece of the expanded beads thereof. Specifically, the heat of fusion can be determined from the DSC curve drawn by heating the expanded beads from 23°C to 200°C at a heating rate of 10°C/min (DSC curve in the first heating), and more specifically, can be measured by the method described in the section of Examples.

The expanded beads having a crystal structure where an intrinsic peak and a high-temperature peak appear on the first DSC curve can be obtained, for example, by expanding the resin particles that have undergone the holding step described above.

The ratio of the heat of fusion at the high-temperature peak to the total heat of fusion of the expanded beads [heat of fusion at the high-temperature peak/total heat of fusion] is preferably 0.1 or more and 0.4 or less, more preferably 0.15 or more and 0.35 or less, still more preferably 0.18 or more and 0.30 or less, and even more preferably 0.20 or more and 0.28 or less. When each heat of fusion mentioned above falls within the above range as well as the ratio mentioned above, expanded beads have excellent in-mold moldability and a wide molding pressure range capable of in-mold molding can be obtained over a wide density range. Also, it is possible to stably produce expanded beads capable of molding a molded article having a low shrinkage rate.

Note that the ratio of the heat of fusion at the high-temperature peak to the total heat of fusion can be calculated from the total heat of fusion and the heat of fusion at the high-temperature peak.

The bulk density of the expanded beads is, from the viewpoint of enhancing the mechanical properties of the resultant molded articles, 10 kg/m$^3$ or more, preferably 13 kg/m$^3$ or more, more preferably 15 kg/m$^3$ or more. On the other hand, from the viewpoint of producing a molded article having a low density, the bulk density of the expanded beads is 300 kg/m$^3$ or less, preferably 200 kg/m$^3$ or less, more preferably 100 kg/m$^3$ or less, still more preferably 80 kg/m$^3$ or less, even more preferably 60 kg/m$^3$ or less, and particularly preferably 30 kg/m$^3$ or less.

As described above, the resultant expanded beads in the present invention can also be subjected to a pressurization treatment, followed by second-stage expansion, in which the expanded beads are heated with steam or the like to further cause expansion, to give expanded beads with an even higher expansion ratio (lower bulk density). From the viewpoint of producing a molded article having a low density, it is preferable to carry out second-stage expansion.

In the case of carrying out second-stage expansion, the bulk density of the expanded beads after the first-stage expansion (before the second-stage expansion) is, from the viewpoint of stably producing expanded beads having a desired cell structure, preferably 60 kg/m$^3$ or more, more preferably 70 kg/m$^3$ or more, still more preferably 80 kg/m$^3$ or more. On the other hand, in the case of carrying out second-stage expansion, the bulk density of the expanded beads after the first-stage expansion (before the second-stage expansion) is, from the viewpoint of stably producing molded article having a low density, preferably 240 kg/m$^3$ or less, preferably 200 kg/m$^3$ or less, more preferably 150 kg/m$^3$ or less, still more preferably 120 kg/m$^3$ or less.

Note that the bulk density can be measured according to the method described in the section of Examples.

The melt flow rate of the mixed resin constituting the expanded beads measured under conditions of a temperature of 190°C and a load of 2.16 kg is preferably 0.1 g/10 min or more and 3 g/10 min or less. When the melt flow rate of the mixed resin falls within the above range, the in-mold moldability of the expanded beads can be enhanced.

The melt flow rate of the mixed resin is more preferably 0.2 g/10 min or more, still more preferably 0.4 g/10 min or more, even more preferably 0.5 g/10 min or more. The melt flow rate of the mixed resin is more preferably 2.0 g/10 min or less, still more preferably 1.5 g/10 min or less, even more preferably 1.2 g/10 min or less.

Note that the melt flow rate of the mixed resin constituting the expanded beads is a value measured under conditions of a temperature of 190°C and a load of 2.16 kg. More specifically, the melt flow rate can be measured according to JIS K 7210-1:2014 by the method described in the section of Examples. Note that the melt flow rate may be measured by using the expanded beads subjected to the defoaming treatment as measurement samples.

The melting point of the expanded beads is, from the viewpoint of easily enhancing the mechanical properties of the resultant molded articles while enhancing the in-mold moldability of the expanded beads, preferably 115°C or higher and 130°C or lower. The melting point of the expanded beads is more preferably 116°C or higher, still more preferably 118°C or higher. On the other hand, the melting point of the expanded beads is, from the viewpoint of enhancing the in-mold moldability of the expanded beads under a low molding pressure condition, more preferably 128°C or lower, still more preferably 125°C or lower.

The melting point of the expanded beads is measured based on JIS K 7121:2012 by using a test piece of the expanded beads thereof. Specifically, for the measurement, the method described in the section of Examples is referred to.

The volume percentage of closed cells in the expanded beads of the present invention is preferably 80% or more. When the volume percentage of closed cells in the expanded beads falls within the above range, the in-mold moldability of the expanded beads can be enhanced. The volume percentage of closed cells in the expanded beads of the present invention is preferably 85% or more, more preferably 88% or more, still more preferably 90% or more. The upper limit of the volume percentage of closed cells in the expanded beads of the present invention is not specifically limited so far as it falls within a range capable of attaining the intended object of the present invention, but may be 99% or less, 98% or less, or 96% or less.

Note that the volume percentage of closed cells can be measured according to the method described in the section of Examples.

The average cell diameter of the expanded beads of the present invention is preferably 150 μm or more and 300 μm or less. When the average cell diameter of the expanded beads falls within the above range, the in-mold moldability of the expanded beads can be stably enhanced. The average cell diameter of the expanded beads of the present invention is preferably 200 μm or more, more preferably 210 μm or more, still more preferably 230 μm or more, even more preferably 250 μm or more. In particular, when the average cell diameter of the expanded beads is 200 μm or more, a relatively thicker bubble film constituting the expanded beads makes the molded article less likely to shrink immediately after molding, or perhaps makes it easier to stably produce expanded beads capable of molding a molded article having a low shrinkage rate. Also, the production of the expanded beads by using the linear low-density polyethylene and the specific branched low-density polyethylene as in the production method of the present invention makes it easy to produce expanded beads having an average cell diameter of 200 μm or more. Conventionally, in the case of producing expanded beads using a copolymer containing a component derived from octene as a copolymerization component (comonomer) as linear low-density polyethylene, the expanded beads tend to have a relatively small cell diameter; however, by employing the production method of the present invention, it is possible to stably produce expanded beads having a large cell diameter while using a copolymer containing a component derived from octene.

The average cell diameter of the expanded beads of the present invention is not specifically limited so far as it falls within a range capable of attaining the intended object of the present invention, but is preferably 400 μm or less, more preferably 350 μm or less, still more preferably 300 μm or less.

The average cell diameter can be determined by drawing plural line segments each running from the outermost surface of an expanded bead to the outermost surface on the opposite side thereof passing through the center part, on an enlarged picture of a cross section of an expanded bead divided into two, followed by dividing the number of the cells crossing each line segment by the total length of the line segment. Specifically, for the measurement, the method described in the section of Examples is referred to.

The average cell diameter of the expanded beads can be controlled to fall within a desired range, for example, by controlling the kind and the amount of the cell controlling agent to be added to the resin particles or by controlling the expanding temperature or the inner pressure of the pressure resistant vessel in expanding the resin particles.

The expanded beads are preferably non-crosslinked. The non-crosslinked structure makes it easier to recycle the expanded beads and reduce the environmental impact.

The term "non-crosslinked" as used herein means that the proportion of insoluble matter in the expanded beads determined by a thermal xylene extraction method is 5% by mass or less. From the viewpoint of facilitating the recycling of the expanded beads, the proportion of the insoluble matter in the expanded beads determined by the thermal xylene extraction method is preferably 3% by mass or less, most preferably 0% by mass.

The xylene insoluble matter in the expanded beads determined by thermal xylene extraction method can be measured as follows: first, about 1 g of precisely weighed expanded beads (exact mass thereof is represented by M (g)) are placed in a 150 mL round-bottomed flask, 100 mL of xylene is added thereto, and the mixture is heated with a mantle heater to reflux for 6 hours. Thereafter, the undissolved residue (insoluble matter) is separated by filtration through a 100-mesh wire gauze and dried in a vacuum dryer at 80°C for 8 hours or more. The mass m (g) of the dried product obtained by drying the residue is measured, and the proportion of m to M is expressed as a percentage, whereby the proportion of the xylene insoluble matter in the expanded beads can be determined.

An average mass per one bead (arithmetic average per one bead calculated by measuring the mass of 100 randomly chosen beads) of the expanded beads of the present invention is preferably 0.1 to 20 mg, more preferably 0.2 to 10 mg, still more preferably 0.3 to 5 mg, and even more preferably 0.4 to 2 mg. The average mass per one bead of the expanded beads can be calculated by measuring the mass of each of 100 randomly chosen expanded beads and then arithmetically averaging these masses.

Additives may be appropriately contained in the mixed resin constituting the expanded beads of the present invention within a range not detracting from the advantageous effects of the present invention. Examples of the additives include an antioxidant, a UV absorbent, an antistatic agent, a flame retardant, a pigment, a dye and a cell controlling agent. For example, these additives can be contained in the expanded beads by adding them in a step of producing the resin particles. The additives contained in the expanded beads of the present invention are the same as the additives contained in the resin particles described in

<Production of polyethylene-based resin expanded beads> above.

The mixed resin constituting the expanded beads of the present invention may contain a polymer such as a resin or an elastomer other than the linear low-density polyethylene and the branched low-density polyethylene within a range not detracting from the advantageous effects of the present invention. In this case, the content of the other polymer than the linear low-density polyethylene and the branched low-density polyethylene in the expanded beads is preferably 40 parts by mass or less, more preferably 30 parts by mass or less, still more preferably 20 parts by mass or less, even more preferably 10 parts by mass or less, particularly preferably 5 parts by mass or less, based on a total of 100 parts by mass of the linear low-density polyethylene and the branched low-density polyethylene.

The expanded beads of the present invention can have a fusion-bonding layer on the surface thereof for enhancing the fusion-bonding properties between the expanded beads during in-mold molding. The fusion-bonding layer may be present on the entire surface or a part of the surface of the expanded beads. Examples of the resin constituting the fusion-bonding layer include a crystalline polyolefin resin having a melting point lower than the melting point of the mixed resin constituting the expanded beads and an amorphous polyolefin resin having a softening point lower than the melting point of the mixed resin constituting the expanded beads.

The method for forming the fusion-bonding layer on the surface of the expanded beads is not particularly limited, and examples thereof include a method for expanding resin particles having a fusion-bonding layer on the surface and a method for adhering a fusion-bonding layer on the surface of expanded beads after obtaining the expanded beads. When resin particles having a fusion-bonding layer on the surface thereof are expanded to give expanded beads, it is preferable to employ a method of disposing a fusion-bonding layer on the surfaces of resin particles by co-extruding a resin melt for forming the resin particle body and a resin melt for forming the fusion-bonding layer using an extruding device capable of co-extrusion when producing resin particles.

<Molded article of polyethylene-based resin expanded beads>

A molded article of polyethylene-based resin expanded beads can be obtained by in-mold molding of the expanded beads of the present invention or the expanded beads obtained by the method for producing expanded beads of the present invention.

In other words, the molded article of polypropylene-based resin expanded beads (hereinafter, also simply referred to as a molded article of expanded beads) is obtained by in-mold molding of the expanded beads.

The molded article of expanded beads can be formed by filling a mold with the expanded beads and heating them using a heating medium such as steam. Specifically, after expanded beads have been filled in a mold, a heating medium such as steam is introduced into the mold to fuse the expanded beads together, while heating and swelling (secondarily expanding) them, thereby forming a molded article of expanded beads given a shape of the molding space. Also in the in-mold molding in the present invention, the expanded beads can be molded according to a pressure molding method which is such that, after the pressure inside the expanded beads has been controlled to be higher by 0.01 to 0.3 MPa than the atmospheric pressure by previously pressurizing the expanded beads by air under pressure such as a gas to increase the pressure inside the cells of the expanded beads, the expanded beads are filled in a mold under atmospheric pressure or under reduced pressure, and thereafter a heating medium such as steam is introduced into the mold to heat and fuse the expanded beads (for example, JPS51-022951B). Also, the expanded beads can be molded according to a compression filling molding method which is such that expanded beads are filled in a mold that has been pressurized to have a higher pressure than atmospheric pressure using compressed gas, in which the expanded beads have been pressurized to have a higher pressure than the pressurized pressure inside the mold, and then heating is performed to introduce a heating medium such as steam into the cavity of the mold to heat and fuse the expanded beads (JPH04-046217B). In addition, the expanded beads can also be molded according to a normal pressure filling molding method in which expanded beads prepared under a specific condition to have a high secondary expanding force are filled in the cavity of a mold under atmospheric pressure or under reduced pressure, and then heating is performed to introduce a heating medium such as steam to heat and fuse expanded beads (JPH06-049795B), or according to a method of a combination of the above-mentioned methods (JPH06-022919B).

From the viewpoint of enhancing the mechanical properties, the density of the molded article of expanded beads is preferably 10 kg/m$^3$ or more, more preferably 13 kg/m$^3$ or more, and still more preferably 15 kg/m$^3$ or more. Also, from the viewpoint of obtaining a lightweight molded article, the density of the molded article of expanded beads is preferably 240 kg/m$^3$ or less, more preferably 200 kg/m$^3$ or less, still more preferably 100 kg/m$^3$ or less, even more preferably 80 kg/m$^3$ or less, still even more preferably 60 kg/m$^3$ or less, particularly preferably 30 kg/m$^3$ or less.

Note that the density of the molded article of expanded beads can be calculated by dividing the mass of the molded article of expanded beads by the volume to be calculated based on the dimension of the molded article of expanded beads and can be measured according to the method described in the section of Examples.

The volume shrinkage rate of the molded article of expanded beads obtained by in-mold molding of the expanded beads is preferably less than 8.0%. The volume shrinkage rate means a shrinkage rate (unit:%) determined by dividing the volume of a molded article which has been removed from the molding die after in-mold molding and cured for 12 hours in an environment of atmospheric pressure (1 atm) at 80°C by the volume of the molding die (molding space) used for molding the molded article.

In in-mold molding of expanded beads, the expanded beads are heated in the mold to fuse the expanded beads together, and then the formed molded article is cooled. In this case, molding shrinkage (volume shrinkage) usually occurs in the molded article, and expanded beads which tend to excessively undergo such molding shrinkage may cause unintended deformation or other problems when molding a molded article having a complicated molding shape. In addition, such expanded beads may cause the dimension of the molded article to easily change when the molding conditions vary, which may make the mold design for obtaining the molded article difficult. From such a viewpoint, it is preferable that the volume shrinkage rate of the molded article of expanded beads is low.

In the present invention, as described above, it is possible to produce a molded article having a low volume shrinkage rate by using specific expanded beads composed of a mixed resin of linear low-density polyethylene and branched low-density polyethylene.

From such a viewpoint, the volume shrinkage rate of the molded article of expanded beads obtained by in-mold molding of the expanded beads is more preferably 7.5% or less, still more preferably 7.0% or less.

The volume of the molded article can be determined, for example, by a method of calculating the volume from the outer dimensions of the molded article or a method of calculating the volume from an increase in volume when the molded article is submerged in water (submergence method).

In addition, in the case of producing a relatively thin molded article such as a plate-shaped molded article or a molded article having a shape in which one direction is longer than the other direction, from the viewpoint of easily producing a molded article sufficiently reflecting the shape of the molding space, the shrinkage rate in the maximum Feret diameter direction of the molded article of expanded beads is preferably less than 3.0%, more preferably 2.8% or less, and still more preferably 2.6% in a plan view of the molded article of expanded beads when viewed from a direction in which the projected area of the molded article of expanded beads is maximum.

The shrinkage rate in the maximum Feret diameter direction means a shrinkage rate (unit:%) determined by dividing the maximum Feret diameter of the molded article of expanded beads in a plan view when viewed from the direction in which the projected area of the molded article of expanded beads is maximum by the length of the corresponding position of the molding die (molding space) used for molding the molded article.

From the viewpoint of obtaining a molded article that is less likely to be excessively deformed by stress and exhibits good strength and flexibility, the ratio of the compression stress at 50% strain of the molded article of expanded beads to the density of the molded article of expanded beads is preferably 4.0 kPa/[kg/m$^3$] or more and 12 kPa/[kg/m$^3$] or less, more preferably 5.0 kPa/[kg/m$^3$] or more and 10 kPa/[kg/m$^3$] or less.

Note that the ratio of the compression stress at 50% strain of the molded article of expanded beads to the density of the molded article of expanded beads is calculated by dividing the stress at 50% strain measured by compressing the molded article of expanded beads as a test piece of 5 cm long × 5 cm wide × 2.5 cm height at a compression rate of 10 mm/min by the density, and can be measured and calculated according to the method described in the section of Examples.

The molded article of polyethylene-based resin expanded beads is lightweight and excellent in mechanical properties, and therefore can be used in applications of food transport containers, packaging/buffering materials for electric/electronic components, vehicle members such as automobile bumpers, building members such as residential heat insulating materials, and miscellaneous goods, as shock absorbing materials, heat insulating materials, various packaging materials and others.

Examples

Next, the present invention is described in further detail with reference to Examples, but the invention is not whatsoever restricted by these Examples.

[Measurement and evaluation]

The resins, expanded beads, and molded articles of expanded beads used in Examples and Comparative Examples were measured and evaluated as follows. For evaluating the expanded beads and the molded articles of expanded beads, these were left and conditioned under the condition of a relative humidity of 50%, 23°C and 1 atm for 2 days, and then tested for evaluation.

<Biomass degree of polyethylene-based resin and biomass degree of resin particles and expanded beads (mixed resin)>

The biomass degree (%) of the polyethylene-based resin (linear low-density polyethylene or branched low-density polyethylene) used in Examples and Comparative Examples is a value determined by measuring the concentration of a radiocarbon $^{14}$C according to ASTM D 6866. The biomass degree (%) of the resin particles and the expanded beads (mixed resin) was calculated from the biomass degree of biomass-derived resin used to produce the expanded beads and the content proportion of biomass-derived resin in the expanded beads.

Note that in Table 1, LL3 is "SLH118" manufactured by Braskem, LD1 is "STN7006" manufactured by Braskem, and LD2 is "LD3020F" manufactured by LyondellBasell. LL3 and LD1 are polyethylenes listed in the positive list of biomass plastics in the Japan Biomass Plastics Association. In the positive list, LL3 is described as linear low-density polyethylene represented by a chemical structural formula of $[(C_2H_4)_n(C_4H_8)_m(C_6H_{12})_o]$ and containing a butene component and an hexene component as copolymerization components.

<Density of polyethylene and density of mixed resin>

The density of the polyethylene (linear low-density polyethylene or branched low-density polyethylene) used in Examples and Comparative Examples and the density of the mixed resin was measured based on Method A (immersion method) of JIS K 7112:1999.

In the measurement of the density of the mixed resin, the expanded beads were first subjected to a defoaming treatment by heat-pressing the expanded beads for 3 minutes with a heating press machine whose temperature was adjusted to 160°C, thereby preparing a resin sheet made of the mixed resin constituting the expanded beads. The density was measured using a pelleted sample obtained by cutting the resin sheet.

<Melt flow rate (MFR) of polyethylene and melt flow rate (MFR) of mixed resin>

The melt flow rate (MFR) ($MFR_{LL}$ or $MFR_{LD}$) of the polyethylene (linear low-density polyethylene or branched low-density polyethylene) used in Examples and Comparative Examples and the melt flow rate (MFR) of the mixed resin constituting the expanded beads of Examples and Comparative Examples were measured according to JIS K 7210-1:2014 under conditions of a temperature of 190°C and a load of 2.16 kg. In the measurement of the melt flow rate of the mixed resin constituting the expanded beads, the expanded beads were first subjected to a defoaming treatment by heat-pressing the expanded beads for 3 minutes with a heating press machine whose temperature was adjusted to 160°C, thereby preparing a resin sheet made of the mixed resin constituting the expanded beads. The melt flow rate was measured using a pelleted sample obtained by cutting the resin sheet.

<Melting point of polyethylene and melting point of resin particles and expanded beads>

The melting point ($Tm_{LL}$ or $Tm_{LD}$) of polyethylene (linear low-density polyethylene or branched low-density polyethylene) used in Examples and Comparative Examples and the melting point of the expanded beads were measured by heat flux differential scanning calorimetry based on JIS K 7121:2012. A high-sensitive differential scanning calorimeter "EXSTAR DSC7020" (manufactured by SII Nano Technology Inc.) was used as the measurement apparatus. For condition control of the test piece, "(2) a case of measuring a melting temperature after predetermined heat treatment" was employed. About 2 mg of polyethylene-based resin or about 2 mg of expanded beads were sampled as a test piece, heated from 23°C to 200°C at a heating rate of 10°C/min under the condition of a nitrogen flow rate of 30 mL/min, then kept at the temperature for 10 minutes, cooled down to 23°C at a cooling rate of 10°C/min, and again heated up to 200°C at a heating rate of 10°C/min to draw a DSC curve (DSC curve at the time of second heating). Next, the peak temperature of the melting peak on the DSC curve was read, and the value was referred to as the melting point. Note that the melting point of the expanded beads was the same as that of the resin particles.

Note that, in the case where multiple melting peaks appear in the DSC curve, the peak top temperature of the melting peak having the largest area is adopted as the melting point. At this time, by distinguishing each melting peak by the valley temperature of the DSC curve located between the peak top temperatures of their respective melting peaks and comparing the area (heat of fusion) of each melting peak, the melting peak having the largest area can be determined. The valley temperature of the DSC curve can also be determined from the temperature at which the value of the ordinate of the derivative curve of the DSC curve (DDSC) becomes 0, and thus can also be determined from the derivative curve of the DSC.

<Heat of fusion of polyethylene, and total heat of fusion of resin particles and expanded beads>

The heat of fusion ($\Delta H_{LL}$ or $\Delta H_{LD}$) of the polyethylene-based resin (linear low-density polyethylene or branched low-density polyethylene) used in Examples and Comparative Examples and the total heat of fusion of the expanded beads (mixed resin) were measured according to JIS K 7122:2012.

First, using a test piece of polyethylene or expanded beads, DSC curves at the time of the second heating were drawn in the same manner as in the measurement of the melting point of low-density polyethylene described above. The point at a temperature of 80°C on the obtained DSC curve at the time of second heating was defined as $\alpha$, and the point on the DSC curve corresponding to the end temperature of melting was defined as $\beta$. The area of the part surrounded by the DSC curve at an interval between the point $\alpha$ and the point $\beta$ and the line segment ($\alpha$-$\beta$) was measured, and the heat of fusion of polyethylene or the total heat of fusion of the expanded beads were calculated from the area. Note that the total heat of fusion of the expanded beads was the same as that of the resin particles.

<Heat of fusion at high-temperature peak of expanded beads>

The heat of fusion at the high-temperature peak of expanded beads were measured by heat flux differential scanning calorimetry according to JIS K 7122:2012. Specifically, about 2 mg of expanded beads were sampled as test pieces and heated from 23°C to 200°C at a heating rate of 10°C/min to draw a DSC curve (DSC curve in the first heating) having two or more melting peaks, using a differential scanning calorimeter (EXSTAR DSC7020). Note that the measurement was conducted under the condition of a nitrogen flow rate of 30 mL/min. With respect to the obtained DSC curve, an intrinsic peak of the mixed resin constituting the expanded beads was represented by A, and a high-temperature peak appearing on the higher temperature side than it was represented by B.

A straight line connecting a point $\alpha$ corresponding to 80°C on the DSC curve and a point $\beta$ on the DSC curve corresponding to the melting end temperature T of the test pieces was drawn ($\alpha$-$\beta$). The melting end temperature T is an endpoint on the high temperature side at the high-temperature peak B, and is an intersection point of the high-temperature peak and the high-temperature side base line. Next, from the point $\gamma$ on the DSC curve equivalent to the valley between the intrinsic peak A and the high-temperature peak B, a straight line parallel to the vertical axis of the graph was drawn, and the point crossing the straight line ($\alpha$-$\beta$) was referred to as $\delta$.

The area of the part surrounded by the curve of the high-temperature peak B part on the DSC curve, the line segment ($\delta$-$\beta$), and the line segment ($\gamma$-$\delta$) was determined, and from this area, the heat of fusion at each high-temperature peak was calculated. The heat of fusion at the above high-temperature peak was measured for three different test pieces, and an arithmetic mean of the obtained values was used as the heat of fusion at the high-temperature peak of the expanded beads.

<Flexural modulus>

The flexural modulus of polyethylene (linear low-density polyethylene or branched low-density polyethylene) was measured as described below.

First, the polyethylene-based resin was heat-pressed at 160°C to prepare a 4-mm sheet, from which a test piece of 80 mm long × 10 mm wide × 4 mm thick was cut. The flexural modulus of the test piece was measured according to JIS K 7171:2016. Note that a radius R1 of an indenter and a radius R2 of a pedestal are both 5 mm, a distance between supporting points is 64 mm, and a test speed is 2 mm/min.

The flexural modulus of the mixed resin was measured as described below. The expanded beads were heat-pressed at 160°C to prepare a 4-mm thick sheet, from which a test piece of 80 mm long × 10 mm wide × 4 mm thick was cut. The flexural modulus of the test piece was measured according to JIS K 7171:2016. Note that a radius R1 of an indenter and a radius R2 of a pedestal are both 5 mm, a distance between supporting points is 64 mm, and a test speed is 2 mm/min. In addition, the flexural modulus of the mixed resin constituting the expanded beads was the same as the flexural modulus of the mixed resin constituting the resin particles.

<Bulk density of expanded beads>

About 500 cm³ of a group of expanded beads were filled in a measuring cylinder, and the bulk height of the group of expanded beads in the measuring cylinder was stabilized by lightly beating a few times the bottom of the measuring cylinder against the floor face. The bulk volume of the group of expanded beads that the scale of the measuring cylinder indicated was read, and this was referred to as V1 (L, liter). Next, the mass of the group of expanded beads was measured, and this was referred to as W1 [g].

The mass W1 [g] of the expanded beads was divided by the volume V1 thereof (W1/V1), and the unit thereof was converted into [kg/m³] to give the bulk density of the expanded beads.

<Volume percentage of closed cells in expanded beads>

The volume percentage of closed cells in expanded beads was measured as follows.

A group of expanded beads having a bulk volume of about 20 cm³ was immersed in ethanol to measure the apparent volume Va of the group of expanded beads. Next, the group of expanded beads that had been measured for apparent volume Va was thoroughly dried. Then, the value Vx of a true volume of the group of expanded beads (the sum of the volume of the resin constituting the expanded beads and the total cell volume of the closed cell portion within the expanded beads) was measured according to Procedure C described in ASTM D2856-70. The true volume Vx was measured using an air comparison pycnometer 930 type manufactured by Toshiba-Beckman Co., Ltd. Subsequently, the volume percentage of closed cells was calculated according to expression (1) given below, and the arithmetic mean of five measurement results using different groups of expanded beads was determined.

$$\text{Volume percentage of closed cells } (\%) = (Vx - W/\rho) \times 100/(Va - W/\rho) \qquad (1)$$

Vx: True volume (cm³) of a group of expanded beads as measured by the method above
Va: Apparent volume (cm³) of a group of expanded beads as measured from the rise in water level when the group of expanded beads is submerged in ethanol in a measuring cylinder
W: Mass (g) of group of expanded beads
$\rho$: Density (g/cm³) of resin constituting expanded beads

<Average cell diameter of expanded beads>

The average cell diameter of expanded beads was measured as follows.

30 expanded beads were randomly chosen from a group of expanded beads. The expanded bead was cut into two portions in such a manner that the cutting line could pass through the center part thereof, and an enlarged photograph of one cross section of every bead was taken. On every cross section photograph, four line segments were drawn from the outermost surface on one side of the expanded bead to the outermost surface on the other side passing through the center part in such a manner that the angle formed by the neighboring two line segments could be equiangular to each other. The number of the cells crossing each line segment was counted, and total length of the four line segments was divided by the total number of cells crossing the line segments to determine the cell diameter of each expanded bead, and the found data were arithmetically averaged to give an average cell diameter of the expanded beads.

<Ratio of bulk density of first-stage expanded bead to bulk density of second-stage expanded bead>

The bulk density of first-stage expanded beads and the bulk density of second-stage expanded beads were measured according to the bulk density measurement method described above. The bulk density of the first-stage expanded beads was divided by the bulk density of the second-stage expanded beads to calculate the ratio of the bulk density of the first-stage expanded beads to the bulk density of the second-stage expanded beads (bulk density$_{(first\text{-}stage\ expansion)}$/bulk density$_{(second\text{-}stage\ expansion)}$). Note that the larger the value of the ratio, the better expandability of the second-stage expansion since the second-stage expanded beads having a low bulk density can be obtained.

<Density of molded article of expanded beads>

A molded article of expanded beads was left under the condition of a relative humidity of 50%, 23°C, and 1 atm for 2 days. Next, the mass thereof was measured and was referred to as W [g].
Next, based on the dimension of the molded article of expanded beads, the volume V [cm$^3$] of the molded article of expanded beads was measured.
The mass W [g] of the molded article of expanded beads was divided by the volume V thereof (W/V), and the unit was converted into [kg/m$^3$] to determine the density of the molded article of expanded beads.

<Molding pressure range>

A molded article of expanded beads was molded by changing the molding pressure (molding steam pressure) by 0.01 MPa between 0.10 and 0.16 MPa (G) according to the method described later in [Production of molded article of expanded beads], and in-mold moldability of the resulting molded article was evaluated with respect to the following items: fusion-bonding properties, surface irregularities, and shape (sink marks (depressions) in the central part of the molded article). The molded article that met the criteria described below was considered to be a pass, and the steam pressure at which all items were passed was considered to be a molding pressure range. Note that the pressure with (G) is a gauge pressure, that is, a pressure value based on atmospheric pressure.
A wider range from the lower limit to the upper limit of the molding pressure range is more suitable for a wider moldable range. In addition, a molded article that can be molded even under a low steam pressure condition is suitable because it can reduce the amount of steam required for molding and has excellent productivity.

(Fusion bonding properties)

The molded article of expanded beads were bent and broken, and the number (C1) of expanded beads present on the broken surface and the number (C2) of broken expanded beads were determined. The ratio of the number of the broken expanded beads to the number of the above expanded beads (C2/C1 × 100) was calculated as the material fracture rate. The measurement was taken five times using different test pieces to determine the material fracture rate of each test piece. A material fracture rate of 80% or more based on the arithmetic mean of the measurement results was considered to be a pass, while a material fracture rate of less than 80% was considered to be a fail.

(Surface irregularities)

The molded article of expanded beads in which the shape of the molding die was sufficiently formed without noticeable irregularities due to adjacent expanded beads in the peripheral edge of the molded article was considered to be a pass, while the molded article in which the shape of the molding die was insufficiently formed with noticeable irregularities due to adjacent expanded beads was considered to be a fail.

(Shape)

The thicknesses near both ends in the longitudinal direction (intersection portion between the position 10 mm inward from the ends toward the center in the longitudinal direction of the molded article and the position dividing the molded article into two equal parts in the lateral direction of the molded article) and the thickness at the center part (intersection portion between the position dividing the molded article into two equal parts in the longitudinal direction and the position dividing the molded article into two equal parts in the lateral direction) of a flat plate-shaped molded article of expanded beads obtained by in-mold molding were each measured. The ratio (%) of the thickness of the center part to the thickness of the thickest part near both ends was then calculated. A ratio of 95% or more (no excessive sink marks occurred in the central part of the molded article) was considered to be a pass, while a ratio of less than 95% (sink marks occurred in the central part of the molded article) was considered to be a fail.

<Molding pressure range capable of molding molded article having volume shrinkage rate of less than 8.0% and lowest shrinkage rate>

The volume of the molded article molded in <Molding pressure range> above was measured. The volume shrinkage rate (unit: %) was calculated by dividing the volume of the molded article by the volume of the molding die (molding space) used for molding the molded article. The range of molding pressure in which a molded article having a volume shrinkage rate of less than 8.0% can be obtained is shown in the table as a molding pressure range capable of molding a molded article having volume shrinkage rate of less than 8.0%. Since the molded article molded in <Molding pressure range> above sufficiently reflected the shape of the molding space, the volume of the molded article was calculated by measuring lengths of the molded article in the longitudinal direction, the lateral direction, and the thickness direction and multiplying them.

The value of the volume shrinkage rate of the molded article having the lowest volume shrinkage rate among the molded articles obtained in this molding pressure range is shown in the table.

Furthermore, the length of the molded article obtained in this molding pressure range was measured in the longitudinal direction of the molded article (longitudinal direction of the molded article: the direction corresponding to 200 mm), the maximum Feret diameter direction of the molded article of expanded beads in the plan view of the molded article when viewed from the direction in which the projected area of the molded article was maximum (in the case of the molded article in Examples, plan view when the molded article was viewed from the mold clamping direction). The shrinkage rate in the longitudinal direction (shrinkage rate in the maximum Feret diameter direction of the molded article of expanded beads, unit: %) was calculated by dividing the length in the longitudinal direction of the molded article by the length in the corresponding direction of the molding die (molding space) used for molding the molded article. Then, the value of the shrinkage rate of the molded article having the lowest longitudinal shrinkage rate among the molded articles obtained in this molding pressure range was determined. In Examples, molded articles having a longitudinal shrinkage rate of less than 3.0% were obtained in all molding pressure ranges capable of molding a molded article having a volume shrinkage rate of less than 8.0%.

<Compression stress at 50% strain of molded article of expanded beads and ratio of compression stress at 50% strain of molded article of expanded beads to density of the molded article of expanded beads>

Test pieces of 5 cm long × 5 cm wide × 2.5 cm height were sampled from the molded articles obtained in Examples and Comparative Examples, and the test pieces were compressed at a compression rate of 10 mm/min to measure the stress at 50% strain. The higher the stress, the better the strength of the molded article of expanded beads. Note that the test pieces were sampled from a molded article molded at the lower limit of the moldable steam pressure.

The resulting compression stress at 50% strain was divided by the density to calculate the ratio of the compression stress at 50% strain of the molded article of expanded beads to the density of the molded article of expanded beads. If the ratio is 5.0 kPa/[kg/m$^3$] or more, the molded article is less likely to be excessively deformed by compression stress which is preferred.

[Polyethylene]

The polyethylene (linear low-density polyethylene (PE-LLD) or branched low-density polyethylene (PE-LD)) used in Examples and Comparative Examples are shown in Table 1. Note that LL1 is linear low-density polyethylene containing 1.8 mol% of a component derived from 1-octene as a copolymerization component (comonomer). LL2 is linear low-density polyethylene containing 1.9 mol% of a component derived from 4-methyl-1-pentene as a copolymerization component (comonomer). LD3 is "LF244E" manufactured by Japan Polyethylene Corporation.

[Table 1]

Table 1

| Resin symbol | | LL1 | LL2 | LL3 | LD1 | LD2 | LD3 |
|---|---|---|---|---|---|---|---|
| Resin type | | PE-LLD | PE-LLD | PE-LLD | PE-LD | PE-LD | PE-LD |
| Biomass degree | [%] | 0 | 0 | 95 | 95 | 58 | 0 |
| Density | [ kg/m³ ] | 926 | 927 | 916 | 924 | 927 | 924 |
| MFR (190°C 2.16 kg) | [g/10 min] | 1.0 | 2.3 | 1.0 | 0.6 | 0.9 | 0.7 |
| Melting point (Tm) | [ °C ] | 123 | 123 | 124 | 111 | 112 | 111 |
| Heat of fusion (ΔH) | [J/g] | 108 | 130 | 83 | 105 | 98 | 94 |
| Flexural modulus | [MPa] | 250 | 260 | 220 | 180 | 245 | 175 |

[Production of expanded beads and molded article of expanded beads]

(Example 1)

<Production of expanded beads>

An extruder having an inner diameter of 26 mm, attached with a strand-forming die on the downstream side, was prepared.

Linear low-density polyethylene LL1, branched low-density polyethylene LD1, and zinc borate as a cell controlling agent were put into the extruder, melted, and kneaded to form a resin melt composed of the mixed resin. LL1 and LD1 were fed in the proportions shown in Table 2, and zinc borate was fed so that the content of zinc borate in the expanded beads could be 500 ppm by mass.

The resultant resin melt was extruded out as strands through the strand-forming die, and the extruded strands were cooled in water, and pelletized with a pelletizer. Thus, resin particles composed of a mixed resin of linear low-density polyethylene and branched low-density polyethylene with an average mass per particle of 1.5 mg, a particle diameter of 1.9 mm, and a length/diameter ratio of 1.9, were obtained.

500 g of the resin particles, 3.5 L of water as a dispersing medium, 3 g of kaolin as a dispersant, and 0.2 g of sodium dodecylbenzenesulfonate (trade name: Neogen, by DKS Co., Ltd.) as a surfactant were charged into a 5-L closed vessel.

Next, carbon dioxide as a blowing agent was injected under pressure into the closed vessel, which was then pressurized up until an equilibrium vapor pressure reached 4.0 MPa(G). Next, while stirred, the contents in the closed vessel were heated up to an expanding temperature shown in Table 2 at a heating rate of 2°C/min. Further, this was kept at the temperature for 15 minutes (holding step). Through this holding step, a heat of fusion (derived from the endothermic curve in DSC measurement) at high-temperature peak was controlled. Thereafter, the contents in the closed vessel were depressurized under atmospheric pressure to give expanded beads (first-stage expanded beads).

The expanded beads obtained as described above were allowed to cure by leaving it in an environment with a temperature of 23°C, a relative humidity of 50%, and 1 atm for 24 hours. Subsequently, the expanded beads after the curing were filled in a pressure resistance closed vessel, and the pressure in the closed vessel was raised from ambient pressure to pressurize the expanded beads. By maintaining the expanded beads in a pressurized state for 24 hours, cells of the expanded beads were impregnated with air. Thereafter, the expanded beads were removed from the closed vessel to obtain expanded beads in which the internal pressure of cells of the expanded beads was 0.5 MPa (G). Subsequently, the expanded beads were transferred into a second-stage expanding device. Steam was supplied into the device to secondarily expand the expanded beads to give expanded beads (second-stage expanded beads). The expanded beads after the second-stage expansion was used for the measurements described above and the production of a molded article of expanded beads.

<Production of molded article of expanded beads>

The expanded beads were filled into a mold capable of molding a flat plate with 200 mm long × 65 mm wide × 45 mm thick and then heated by the following heating method.

First, pre-heating (exhaust step) was carried out by supplying steam to the mold in the state where drain valves provided on both sides of the mold were open. Thereafter, steam was supplied from one side of the mold for heating, and then steam was supplied from the other side of the mold for further heating. Subsequently, the mold was heated by supplying steam from both sides of the mold at the predetermined molding heating steam pressure (main heating). After completion of the main heating, the mold was depressurized and cooled with water until the pressure generated on the molding surface of the mold could reach 0.04 MPa(G), and then the mold was opened to remove the molded article of expanded beads.

The obtained molded article was cured in an oven at 80°C for 12 hours under atmospheric pressure (1 atm) to give a molded article of expanded beads. In the aforementioned evaluation of <Molding pressure range>, molding was carried out by changing the molding pressure.

The measurement results of physical properties of the resultant expanded beads and the evaluation results of the molded article of expanded beads are shown in Table 2. Note that expanded beads are non-crosslinked expanded beads. The value of the shrinkage rate of the molded article having the lowest longitudinal shrinkage rate among the molded articles obtained within <Molding pressure range> was 2.5%.

(Examples 2 to 4)

Expanded beads and molded articles of expanded beads were produced in the same manner as in Example 1, except that the types of linear low-density polyethylene and branched low-density polyethylene, proportion thereof, and expanding temperature in Example 1 were changed to the conditions shown in Table 2. The measurement results of physical properties of the resultant expanded beads and the evaluation results of the molded article of expanded beads are shown in Table 2. Note that each expanded bead is a non-crosslinked expanded bead. The values of the shrinkage rate of the molded article having the lowest longitudinal shrinkage rate among the molded articles obtained within <Molding pressure range> were 2.8% in Example 2, 2.5% in Example 3, and 2.9% in Example 4.

(Comparative Examples 1 to 6)

Expanded beads and molded articles of expanded beads were produced in the same manner as in Example 1, except that the types of linear low-density polyethylene and branched low-density polyethylene, proportion thereof, and expanding temperature in Example 1 were changed to the conditions shown in Table 3. The measurement results of physical properties of the resultant expanded beads and the evaluation results of the molded article of expanded beads are shown in Table 3. Note that each expanded bead is a non-crosslinked expanded bead. In addition, the values of the shrinkage rate of the molded article having the lowest longitudinal shrinkage rate among the molded articles obtained within <Molding pressure range> were 3.2% in Comparative Example 1, 3.1% in Comparative Example 2, 3.1% in Comparative Example 3, 2.9% in Comparative Example 4, and 3.3% in Comparative Example 6.

[Table 2]

Table 2

| | | | | Example 1 | Example 2 | Example 3 | Example 4 |
|---|---|---|---|---|---|---|---|
| Properties of raw material | PE-LLD | Type | - | LL1 | LL1 | LL1 | LL2 |
| | | Proportion | % by mass | 75 | 75 | 85 | 75 |
| | PE-LD | Type | - | LD1 | LD2 | LD1 | LD1 |
| | | Biomass degree | % | 95 | 58 | 95 | 95 |
| | | Proportion | % by mass | 25 | 25 | 15 | 25 |
| | Difference in heat of fusion ($\Delta H_{LL} - \Delta H_{LD}$) | | J/g | 3 | 10 | 3 | 25 |
| | Difference in MFR ($MFR_{LL} - MFR_{LD}$) | | g/10 min | 0.4 | 0.1 | 0.4 | 1.7 |
| | Difference in melting point ($Tm_{LL} - Tm_{LD}$) | | °C | 12 | 10 | 12 | 12 |
| Expanding temperature | | | °C | 122.9 | 122.3 | 122.6 | 122.4 |

(continued)

| | | | | Example 1 | Example 2 | Example 3 | Example 4 |
|---|---|---|---|---|---|---|---|
| Expanded bead(s) (mixed resin) | (A) Total heat of fusion | | J/g | 119 | 110 | 112 | 104 |
| | (B) Heat of fusion at high-temperature peak | | J/g | 26 | 28 | 29 | 29 |
| | (B)/(A) | | - | 0.22 | 0.25 | 0.26 | 0.28 |
| | Biomass degree | | % | 24 | 15 | 14 | 24 |
| | Melting point | | °C | 121 | 121 | 121 | 122 |
| | MFR (190°C, 2.16 kg) | | g/10 min | 0.7 | 0.6 | 0.7 | 1.3 |
| | Density of mixed resin | | kg/m³ | 925 | 925 | 925 | 925 |
| | Flexural modulus of mixed resin | | MPa | 225 | 210 | 235 | 245 |
| | First-stage expanded bead(s) | Bulk density | kg/m³ | 82 | 112 | 96 | 78 |
| | | Volume percentage of closed cells | % | 93 | 93 | 93 | 93 |
| | | Average cell diameter | μm | 113 | 102 | 84 | 148 |
| | Second-stage expanded bead(s) | Bulk density | kg/m³ | 17 | 23 | 21 | 17 |
| | | Volume percentage of closed cells | % | 92 | 93 | 92 | 92 |
| | | Average cell diameter | μm | 266 | 238 | 200 | 230 |
| | Bulk density$_{(first-stage expansion)}$/bulk density$_{(second-stage expansion)}$ | | - | 4.8 | 4.9 | 4.6 | 4.8 |
| Molded article of expanded beads | Molded article density | | kg/m³ | 22 | 27 | 27 | 22 |
| | Molding pressure range | | MPa(G) | 0.12-0.14 | 0.12-0.13 | 0.12-0.14 | 0.11-0.12 |
| | Molding pressure range capable of molding molded article having a volume shrinkage rate of less than 8.0% | | MPa(G) | 0.12-0.14 | 0.12-0.13 | 0.12-0.14 | 0.11-0.12 |
| | Lowest volume shrinkage rate within the above molding pressure range | | % | 6.6 | 7.5 | 6.6 | 7.3 |
| | Compression stress at 50% strain | | kPa | 125 | 140 | 140 | 125 |
| | Compression stress at 50% strain/density | | kPa/[kg/m³] | 5.8 | 5.4 | 5.7 | 5.8 |

[Table 3]

Table 3

| | | | | Comparative Example 1 | Comparative Example 2 | Comparative Example 3 | Comparative Example 4 | Comparative Example 5 | Comparative Example 6 |
|---|---|---|---|---|---|---|---|---|---|
| Properties of raw material | PE-LLD | Type | - | LL1 | LL1 | LL1 | LL1 | LL1 | LL2 |
| | | Proportion | % by mass | 100 | 75 | 85 | 75 | 45 | 100 |
| | PE-LD | Type | - | - | LD3 | LD3 | LL3 | LD1 | - |
| | | Biomass degree | % | - | 0 | 0 | 95 | 95 | - |
| | | Proportion | % by mass | - | 25 | 15 | 25 | 55 | - |
| | Difference in heat of fusion ($\Delta H_{LL} - \Delta H_{LD}$) | | J/g | - | 14 | 14 | 25 | 3 | - |
| | Difference in MFR ($MFR_{LL} - MFR_{LD}$) | | g/10 min | - | 0.3 | 0.3 | 0 | 0.4 | - |
| | Difference in melting point ($Tm_{LL} - Tm_{LD}$) | | °C | - | 12 | 12 | -1 | 12 | - |
| Expanding temperature | | | °C | 122.9 | 121.7 | 122.4 | 122.9 | 119.2 | 123.6 |

| | | | Comparative Example 1 | Comparative Example 2 | Comparative Example 3 | Comparative Example 4 | Comparative Example 5 | Comparative Example 6 |
|---|---|---|---|---|---|---|---|---|
| Expanded bead(s) (mixed resin) | (A) Total heat of fusion | J/g | 109 | 104 | 100 | 101 | 97 | 104 |
| | (B) Heat of fusion at high-temperature peak | J/g | 25 | 24 | 26 | 27 | 25 | 33 |
| | (B)/(A) | - | 0.23 | 0.23 | 0.26 | 0.27 | 0.25 | 0.32 |
| | Biomass degree | % | 0 | 0 | 0 | 21 | 52 | 0 |
| | Melting point | °C | 122 | 121 | 121 | 122 | 120 | 123 |
| | MFR (190°C, 2.16 kg) | g/10 min | 0.8 | 0.6 | 0.7 | 0.8 | 0.5 | 2.0 |
| | Density of mixed resin | kg/m$^3$ | 926 | 925 | 925 | 924 | 925 | 927 |
| | Flexural modulus of mixed resin | MPa | 255 | 220 | 225 | 230 | 190 | 260 |
| | First-stage expanded bead(s) — Bulk density | kg/m$^3$ | 91 | 88 | 100 | 107 | 105 | 115 |
| | First-stage expanded bead(s) — Volume percentage of closed cells | % | 94 | 94 | 94 | 94 | 93 | 93 |
| | First-stage expanded bead(s) — Average cell diameter | μm | 78 | 90 | 91 | 92 | 101 | 135 |
| | Second-stage expanded bead(s) — Bulk density | kg/m$^3$ | 21 | 23 | 28 | 19 | 23 | 20 |
| | Second-stage expanded bead(s) — Volume percentage of closed cells | % | 93 | 94 | 94 | 92 | 93 | 91 |
| | Second-stage expanded bead(s) — Average cell diameter | μm | 192 | 186 | 167 | 190 | 238 | 240 |
| | Bulk density$_{(first-stage expansion)}$/bulk density$_{(second-stage expansion)}$ | - | 4.3 | 3.8 | 3.6 | 5.6 | 4.6 | 5.8 |
| Molded article of expanded beads | Molded article density | kg/m$^3$ | 25 | 25 | 37 | 25 | - | 23 |
| | Molding pressure range | MPa(G) | 0.13-0.14 | 0.12-0.13 | 0.13-0.14 | 0.13-0.15 | None | 0.11-0.12 |
| | Molding pressure range capable of molding molded article having a volume shrinkage rate of less than 8.0% | MPa(G) | None | None | None | None | None | None |
| | Lowest volume shrinkage rate within the above molding pressure range | % | 9.4 | 8.1 | 8.2 | 8.1 | - | 9.4 |
| | Compression stress at 50% strain | kPa | 130 | 135 | 160 | 135 | - | 140 |
| | Compression stress at 50% strain/density | kPa/ [kg/m$^3$] | 5.4 | 5.4 | 4.6 | 5.5 | - | 5.5 |

EP 4 631 997 A1

From the results shown in Table 2, it is known that the expanded beads of Examples have a biomass degree equal to or higher than a specific level and are excellent in in-mold moldability. It is further known that the expanded beads of Examples can be molded in a mold under a low molding pressure condition and have a wide molding range to yield a molded article having a particularly small shrinkage rate. It is further known that the molded article of polyethylene-based resin expanded beads produced by using the expanded beads of Examples has a high compression stress even with a low density.

**Claims**

1.  A method for producing polyethylene-based resin expanded beads by expanding polyethylene-based resin particles,

    the polyethylene-based resin particles being composed of a mixed resin of linear low-density polyethylene and branched low-density polyethylene, which is obtained by kneading the linear low-density polyethylene and the branched low-density polyethylene, wherein
    the branched low-density polyethylene has a biomass degree of 30% or more as measured according to ASTM D 6866;
    a heat of fusion of the branched low-density polyethylene is 95 J/g or more;
    a blending amount of the branched low-density polyethylene in the mixed resin is 5% by mass or more and less than 40% by mass, where a total of the linear low-density polyethylene and the branched low-density polyethylene is 100% by mass; and
    a total heat of fusion of the polyethylene-based resin particle is 90 J/g or more.

2.  The method for producing polyethylene-based resin expanded beads according to claim 1, wherein a difference $\Delta H_{LL}$ - $\Delta H_{LD}$ between a heat of fusion $\Delta H_{LL}$ of the linear low-density polyethylene and a heat of fusion $\Delta H_{LD}$ of the branched low-density polyethylene is 0 J/g or more and 30 J/g or less.

3.  The method for producing polyethylene-based resin expanded beads according to claim 1, wherein

    the polyethylene-based resin particle has a melting point of 115°C or higher and 130°C or lower; and
    a difference $Tm_{LL}$ - $Tm_{LD}$ between a melting point $Tm_{LL}$ of the linear low-density polyethylene and a melting point $Tm_{LD}$ of the branched low-density polyethylene is 5°C or higher and 15°C or lower.

4.  The method for producing polyethylene-based resin expanded beads according to claim 1, wherein a melt flow rate of the branched low-density polyethylene measured under conditions of a temperature of 190°C and a load of 2.16 kg is 0.1 g/10 min or more and 3 g/10 min or less.

5.  The method for producing polyethylene-based resin expanded beads according to claim 1, wherein the linear low-density polyethylene is a copolymer comprising a component derived from octene.

6.  The method for producing polyethylene-based resin expanded beads according to claim 1, wherein the polyethylene-based resin particle has a biomass degree of 5% or more as measured according to ASTM D 6866.

7.  The method for producing polyethylene-based resin expanded beads according to claim 1, wherein the mixed resin has a flexural modulus of 200 MPa or more.

8.  A polyethylene-based resin expanded bead,

    the expanded bead being composed of a mixed resin of linear low-density polyethylene and branched low-density polyethylene, wherein
    the mixed resin has a flexural modulus of 200 MPa or more;
    the expanded bead has a biomass degree of 5% or more as measured according to ASTM D 6866; and
    a total heat of fusion of the expanded bead is 90 J/g or more.

9.  The polyethylene-based resin expanded bead according to claim 8, wherein a blending amount of the branched low-density polyethylene in the mixed resin is 5% by mass or more and less than 40% by mass, where a total of the linear low-density polyethylene and the branched low-density polyethylene is 100% by mass.

10. The polyethylene-based resin expanded bead according to claim 8, wherein the polyethylene-based resin expanded bead has a melting point of 115°C or higher and 130°C or lower.

| | Europäisches Patentamt European Patent Office Office européen des brevets | **EUROPEAN SEARCH REPORT** | **Application Number** EP 25 16 9718 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2023/189115 A1 (JSP CORP [JP]) 5 October 2023 (2023-10-05) * examples 6-7 * | 1-10 | INV. C08J9/00 B29C44/44 C08J9/18 C08J9/232 |
| Y | EP 0 188 540 B1 (DOW CHEMICAL CO [US]) 19 April 1989 (1989-04-19) * page 10, paragraph 1 * | 1-10 | |
| Y | BEHRAVESH AMIR H. ET AL: "Formation and characterization of polyethylene blends for autoclave-based expanded-bead foams", POLYMER ENGINEERING AND SCIENCE, vol. 50, no. 6, 28 December 2009 (2009-12-28), pages 1161-1167, XP093292626, US ISSN: 0032-3888, DOI: 10.1002/pen.21641 Retrieved from the Internet: URL:https://api.wiley.com/onlinelibrary/td m/v1/articles/10.1002%2Fpen.21641> * blend 2 * | 1-10 | |
| Y | ZHANG HONG ET AL: "Evaluating melt foamability of LLDPE/LDPE blends with high LLDPE content by bubble coalescence mechanism", POLYMER, ELSEVIER, AMSTERDAM, NL, vol. 213, 10 November 2020 (2020-11-10), XP086442439, ISSN: 0032-3861, DOI: 10.1016/J.POLYMER.2020.123209 [retrieved on 2020-11-10] * experimental part * | 1-10 | **TECHNICAL FIELDS SEARCHED (IPC)** C08J B29C C08L |

The present search report has been drawn up for all claims

| Place of search | Date of completion of the search | Examiner |
|---|---|---|
| The Hague | 4 July 2025 | Jegou, Gwénaëlle |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 9718

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2025

| Patent document cited in search report | Publication date | Patent family member(s) | | Publication date |
|---|---|---|---|---|
| WO 2023189115 A1 | 05-10-2023 | CN | 119013336 A | 22-11-2024 |
| | | EP | 4502024 A1 | 05-02-2025 |
| | | TW | 202344588 A | 16-11-2023 |
| | | WO | 2023189115 A1 | 05-10-2023 |
| EP 0188540 B1 | 19-04-1989 | AT | E42318 T1 | 15-05-1989 |
| | | AU | 572681 B2 | 12-05-1988 |
| | | CA | 1266150 A | 20-02-1990 |
| | | EP | 0188540 A1 | 30-07-1986 |
| | | ES | 8609382 A1 | 16-07-1986 |
| | | GR | 851651 B | 26-11-1985 |
| | | NO | 165244 B | 08-10-1990 |
| | | US | 4738810 A | 19-04-1988 |
| | | WO | 8600628 A1 | 30-01-1986 |
| | | ZA | 855057 B | 25-03-1987 |

EPO FORM P0459

For more details about this annex : see Official Journal of the European Patent Office, No. 12/82

**REFERENCES CITED IN THE DESCRIPTION**

**Patent documents cited in the description**

- JP 2023161416 A